# FASCICULE DE BREVET EUROPEEN

(11) **EP 3 975 434 B1**
(45) Date de publication et mention de la délivrance du brevet: **28.02.2024**
(21) Numéro de dépôt: 21197188.2
(22) Date de dépôt: 16.09.2021
(51) Int. Cl.: H04B 1/12, H04K 3/00, H04B 7/185

(54) **SYSTÈME ET PROCÉDÉ DE SUPPRESSION DE SIGNAUX INTERFÉRENTS MONTANTS GÉNÉRÉS À L'INTERIEUR D'UN SYSTÈME SPATIAL DE COMMUNICATION MULTI-SPOTS**
SYSTEM UND VERFAHREN ZUR UNTERDRÜCKUNG VON AUFWÄRTS GERICHTETEN STÖRSIGNALEN, DIE IN EINEM MEHRPUNKT-RAUMKOMMUNIKATIONSSYSTEM ERZEUGT WERDEN
SYSTEM AND METHOD FOR SUPPRESSING INTERFERING UPLINK SIGNALS GENERATED INSIDE A SPATIAL SYSTEM FOR MULTI-SPOT COMMUNICATION

(30) Priorité: 24.09.2020 FR 2009687
(43) Date de publication de la demande: 30.03.2022
(73) Titulaire: THALES, 92190 Meudon (FR)
(72) Inventeur: KAROUI, Walid, 31100 TOULOUSE (FR)
(74) Mandataire: Atout PI Laplace

(56) Documents cités:
- EP-A2- 1 189 303
- WO-A1-2017/009562
- US-A1- 2015 123 843

## Description

La présente invention concerne un système spatial et un procédé de suppression de signaux d'interférence générés entre des stations d'accès satellitaire, géographiquement voisines et faisant partie d'un système spatial de communication multi-spots.

Dans un système spatial de transmission multi-spots, comportant un satellite de transmission multi-spots, l'antenne de réception satellite de la voie montante d'accès des stations d'accès satellitaire doit garantir une isolation mutuelle supérieure à 20 dB entre les stations d'accès satellitaire GWs (en anglais « gateways ») actives afin de ne pas dégrader de manière importante les performances du système spatial de communication en termes de C/I (rapport de la puissance du signal utile sur la puissance totale des signaux interférents) et de minimiser l'impact sur le bilan de liaison du signal utile.

Cette contrainte élevée d'isolation impose un espacement spatial au sol entre les stations d'accès satellitaire GWs supérieur à deux fois le diamètre de la trace au sol d'un faisceau, encore appelée spot.

Cet espacement spatial au sol entre les stations d'accès GWs ne peut pas être respecté tout le temps car les positions des stations d'accès GWs sont choisies par les opérateurs des services de télécommunication sur la base de plusieurs critères parmi lesquels notamment la présence ou l'existence de raccordement par fibre optique, d'infrastructure de réseau à débit élevé, et la pluviométrie des sites d'implantation des stations.

En outre, les opérateurs des services de télécommunication imposent quasi-systématiquement dans leurs exigences de définition du système une flexibilité très tardive sur le choix de la localisation des stations d'accès satellitaire GWs dans la couverture pouvant aller jusqu'à quelques mois après le démarrage du programme. La non-connaissance de la localisation géographique exacte des stations d'accès GWs, ne permet pas de prendre en compte les contraintes d'isolation lors de la phase d'optimisation des performances des antennes ce qui représente un risque de devoir tout refaire lorsque la position finale des stations d'accès GWs sera connue.

Afin d'offrir de la souplesse aux opérateurs de services de télécommunication quant au choix tardif de la localisation géographiques des de stations d'accès GWs, une solution connue, décrite dans la demande de brevet WO 2017/009562 A1, utilise un sous-système, embarqué à bord du satellite, incluant une matrice d'opposition, des chaines de conversions de fréquence et un calculateur bord. Ce sous-système, ajouté et implanté en aval de l'antenne de réception satellite de communication, est configuré pour calculer la loi d'opposition et appliquer ladite loi dans la matrice d'opposition afin de supprimer les signaux interférents présents sur les voies de communication de la charge utile.

Cette solution présente toutefois les inconvénients suivants :
- une complexité et un coût élevé en termes de nombre d'équipements spatiaux supplémentaires, i.e. un calculateur et des chaines de conversion de fréquence ;
- une augmentation de la masse, de la consommation et de la dissipation de la charge utile du satellite et in fine du satellite ;
- des contraintes d'aménagement de la charge utile et du satellite induites par l'ajout de ces équipements spatiaux supplémentaires.

Le problème technique résolu par l'invention est de fournir un système et un procédé de suppression de signaux d'interférences montants générés entre des stations d'accès satellitaires, géographiquement voisines et faisant partie d'un système spatial de communication multi-spots, dans lesquels la complexité, le coût, la masse, la consommation, la dissipation, les contraintes d'aménagement de la charge utile sont diminués.

A cet effet l'invention a pour objet un procédé de suppression de signaux interférents montants, générés entre des stations d'accès satellitaire, géographiquement voisines et faisant partie d'un système spatial de communication multi-spots,le système spatial de communication multi-spots comportant :
- un satellite de télécommunication incluant une charge utile embarquée de communication multi-spots ; et
- un premier ensemble d'un nombre entier N, supérieur ou égal à 2, de stations d'accès satellitaire GWi géographiquement voisines, i étant un premier indice entier variant de 1 à N ; et
- un deuxième ensemble de terminaux utilisateurs ;

la charge utile de communication multi-spots ayant une antenne de réception satellite, une antenne d'émission satellite, et N voies répéteur VRi, i variant de 1 à N, l'antenne de réception satellite étant configurée pour recevoir en voie montante dans une bande de fréquence de réception, en même temps et en parallèle depuis N spots voisins de réception SPRi, i variant de 1 à N, N signaux radioélectriques de réception SRi différents, émis respectivement par les stations d'accès satellitaires GWi, chaque station d'accès satellitaire GWi, i variant de 1 à N, étant située dans un unique spot de réception SPRi correspondant, et chaque signal radioélectrique reçu SRi, i variant de 1 à N, étant délivré par une source de réception unique SRRi correspondante au spot réception SPRi et faisant partie de l'antenne de réception ; l'antenne d'émission satellite étant configurée pour émettre en voie descendante dans une bande de fréquence d'émission, en même temps et en parallèle vers N spots voisins d'émission SPEi, i variant de 1 à N, N signaux radioélectriques d'émission SEi différents, fournis respectivement à N sources d'émission SREi correspondante aux spots émission SPEi et faisant partie de l'antenne émission, chaque spot d'émission SPEi, i variant de 1 à N, recouvrant la station d'accès satellitaire GWi correspondante, ayant une couverture sensiblement identique à celle du spot de réception SPRi, et les N signaux radioélectriques d'émissions SEi étant respectivement les signaux radioélectriques reçus SRi, amplifiés et transposés, de préférence abaissés, uniformément en fréquence ;
chaque voie répéteur VRi, i variant de 1 à N, étant comprise nominalement entre la source réception SRRi et la source émission SREi de même valeur d'indice i et comportant en aval de la source réception SRRi un amplificateur en réception LNAi et un diviseur RF DIVi à une entrée et N sorties, et un convertisseur de transposition, de préférence abaisseur, de fréquences DWNi connecté à une sortie du diviseur RF DIVi,
les terminaux utilisateurs du deuxième ensemble étant répartis sur les N spots d'émission SPEi, i variant de 1 à N ;
le procédé de suppression de signaux d'interférence générés entre stations d'accès satellitaire, étant caractérisé en ce qu'il comprend :
   - dans une première phase avant lancement du satellite, une première étape, dans laquelle pour un entier i0 prédéterminé et fixé, pris parmi les entiers compris entre 1 et N, on implante de manière permanente dans la voie répéteur VRi0 une matrice d'opposition MATi0 à N lignes d'entrées Li0,k, k variant de 1 à N, et une unique borne de sortie, la ligne d'entrée Li0,i0 étant une ligne d'entrée directe, connectée directement à une sortie du diviseur DIVi0, la ou les N-1 lignes d'entrée(s) restante(s) Li0, j, j étant un indice variant de 1 à N et différant de i0, étant des lignes dérivées d'opposition de la matrice d'opposition MATi0, connectée(s) respectivement au(x) diviseur(s) DIVj correspondant(s) en une de leurs sorties, et l'unique borne de sortie de la matrice d'opposition MATi0 étant connectée à la borne d'entrée du convertisseur de transposition de fréquences DWNi0, la matrice d'opposition MATi0 comportant les lignes d'entrées Li0,i et un combineur COMi0 à N entrées/une sortie, alimenté en entrée par les lignes d'entrée Li0, k, k variant de 1 à N, et connecté en sortie à la borne de sortie de la matrice d'opposition, et chaque ligne d'entrée, dérivée d'opposition, Li0, j, j variant de 1 à N et différant de i0, incluant un atténuateur et déphaseur différent contrôlable par télécommande ; puis
   - dans une deuxième phase après le lancement du satellite et la mise en service des stations d'accès satellite,
   - une deuxième étape dans laquelle une source d'émission SREt, t étant un entier prédéterminé, compris entre 1 et N, correspondante au spot d'émission satellite SPEt, recouvrant la station d'accès satellite GWt qui comporte un dispositif de surveillance du spectre de communication, est sélectionnée, et dans laquelle la borne de sortie de la matrice d'opposition MATi0 est connectée à la source d'émission SREt sélectionnée et les sources d'émission restantes SREs, s étant un indice variant de 1 à N et différent de t, sont déconnectées de leur voies répéteurs VRs associées, en configurant de manière idoine des commutateurs d'un anneau de sélection de sortie (134), connecté entre des bornes de sortie des voies répéteur VRi et les sources émission SREi de l'antenne émission, i variant de 1 à N ; puis
   - une troisième étape dans laquelle la source de réception SRRi0, correspondante du spot de réception SPRi0 recouvrant la station d'accès satellite GWi0, est connectée à la ligne directe d'entrée de la matrice d'opposition MATi0, et les sources de réception SRRj, j variant de 1 à N et différent de i0, sont déconnectées des N-1 lignes d'entrée dérivées d'opposition Li0, j de la matrice d'opposition MATi0 ; ensuite
   - une quatrième étape dans laquelle la station d'accès satellitaire GWt, de rang t, reçoit un multiplex de signaux de test émis par les stations d'accès satellitaire GWk, k variant de 1 à N, du premier ensemble, et reçus par la source de réception SRRI0 et retransmis par la source d'émission SREt, et numérise ledit multiplex en un signal utile d'acquisition ACQi0, i0 ; puis
   - une cinquième étape dans laquelle, pour chaque source de réception restante SRRj, j variant de 1 à N et différent de i0,
      ** la source de réception SRRj restante, correspondante au spot de réception SPRj recouvrant la station d'accès satellite GWj, est connectée à la ligne dérivée d'opposition Li0, j de la matrice d'opposition MATi0, et les sources de réception SRRk, k variant de 1 à N et différent de j, sont déconnectées des N-1 lignes d'entrée correspondantes Li0, k de la matrice d'opposition MATi0 ; puis
      ** la station d'accès satellitaire GWt reçoit un multiplex de signaux de test émis par les stations d'accès satellitaire GWk, k variant de 1 à N, reçus par la source de réception SRRj et retransmis par la source d'émission SREt, et numérise ledit multiplex en un signal interférent d'acquisition ACQi0, j ; ensuite
   - une sixième étape, dans laquelle la station d'accès fait calculer par un calculateur de surveillance spectrale des signaux de communication reçus, pour chaque signal interférent d'acquisition ACQi0, j, j variant de 1 à N et différent de i0, un coefficient complexe Ci0, j de corrélation entre le signal utile d'acquisition ACQi0, i0 et le signal interférent d'acquisition ACQi0, j, et déterminer à partir du coefficient complexe Ci0, j des valeurs d'atténuation et de déphasage de la ligne d'opposition Li0, j permettant de rejeter le signal interférent généré par GWj sur l'accès en réception répéteur attribué à la station d'accès GWi0 ; puis
   - une septième étape, dans laquelle les atténuateurs/déphaseurs de la matrice d'opposition MATi0 sont réglés par télécommande sur les valeurs d'atténuation et de déphasage déterminées dans la sixième étape (314 ; 414).

Selon des modes particuliers de réalisation, le procédé de suppression de signaux interférents montants comprend l'une ou plusieurs des caractéristiques suivantes, prises isolément ou en combinaison :
- pendant la première phase, la première étape avant lancement du satellite consiste à :
   pour i variant de 1 à N, implanter de manière permanente dans voie répéteur VRi, une matrice d'opposition MATi à N lignes d'entrées Li, k, k variant de 1 à N, et une unique borne de sortie, la ligne d'entrée Li, i étant une ligne d'entrée directe, connectée directement à une sortie du diviseur DIVi, la ou les N-1 lignes d'entrée(s) restante(s) Li, j, j étant un deuxième indice variant de 1 à N et différant de i, étant des lignes dérivées d'opposition de la matrice d'opposition MATi, connectée(s) respectivement au(x) diviseur(s) DIVj correspondant(s) en une de leurs sorties, et l'unique borne de sortie de la matrice d'opposition MATi étant connectée à la borne d'entrée du convertisseur de transposition de fréquences DWNi, la matrice d'opposition MATi comportant les lignes d'entrées Li, k et un combineur COMi à N entrées/une sortie, alimenté en entrée par les lignes d'entrée Li, k, k variant de 1 à N, et connectée en sortie à la borne de sortie de la matrice d'opposition MATi, et
   chaque ligne d'entrée, dérivée d'opposition, Li, j, j variant de 1 à N et différant de i, incluant un atténuateur et déphaseur différent contrôlable par télécommande ; puis
- pendant la deuxième phase après lancement du satellite (4) et de mise en service des stations d'accès satellite, pour i variant de 1 à N,
- la deuxième étape consiste à sélectionner la source d'émission SREt, t étant un entier prédéterminé, compris entre 1 et N, correspondante au spot d'émission satellite SPEt, recouvrant la station d'accès satellite GWt qui comporte un dispositif de surveillance du spectre de communication, et à connecter la borne de sortie de la matrice d'opposition MATi à la source d'émission SREt sélectionnée et à déconnecter les sources d'émission restantes SREs, s étant un indice variant de 1 à N et différant de t, de leurs voies répéteurs VRs associées, en configurant de manière idoine les commutateurs de l'anneau de sélection de sortie (134), connecté entre les bornes de sortie des voies répéteur VRi et es sources d'émission SREi de l'antenne émission (24) ;
- la troisième étape consiste à connecter la source de réception SRRi, correspondante du spot de réception SPRi recouvrant la station d'accès satellite GWi, à la ligne directe d'entrée de la matrice d'opposition MATi, et à déconnecter les sources de réception SRRj, j variant de 1 à N et différent de i, des N-1 lignes d'entrée dérivées d'opposition Li,j de la matrice d'opposition MATi ;
- la quatrième étape consiste en ce que la station d'accès satellitaire GWt, de rang t, reçoit un multiplex de signaux de test émis par les stations d'accès satellitaire GWk, k variant de 1 à N, du premier ensemble, et reçus par la source de réception SRRi et retransmis par la source d'émission SREt, et numérise ledit multiplex en un signal utile d'acquisition ACQi, i ; puis
- la cinquième étape consiste à, pour chaque source de réception restante SRRj, j variant de 1 à N et différent de i,
   ** connecter la source de réception SRRj restante, correspondante au spot de réception SPRj recouvrant la station d'accès satellite GWj, à la ligne dérivée d'opposition Li, j de la matrice d'opposition MATi, et à déconnecter les sources de réception SRRk, k variant de 1 à N et différent de j, des N-1 lignes d'entrée correspondantes Li, k de la matrice d'opposition MATi ; puis
   ** en ce que la station d'accès satellitaire GWt reçoit un multiplex de signaux de test émis par les stations d'accès satellitaire GWk, k variant de 1 à N, reçus par la source de réception SRRi et retransmis par la source d'émission SREt, et numérise ledit multiplex en un signal interférent d'acquisition ACQi,j ;
- une sixième étape consiste en ce que la station d'accès GWt fait calculer par son calculateur de suivi spectral des signaux de communication, pour chaque signal interférent d'acquisition ACQi, j, j variant de 1 à N et différent de i, un coefficient complexe Ci, j de corrélation entre le signal utile d'acquisition ACQi,i et le signal interférent d'acquisition ACQi, j, et déterminer à partir du coefficient complexe Ci, j des valeurs d'atténuation et de déphasage de la ligne d'opposition Li, j permettant de rejeter le signal interférent généré par la station GWj sur l'accès en réception répéteur attribué à la station d'accès GWi ;
- la septième étape consiste en ce que les atténuateurs/déphaseurs de la matrice d'opposition MATi sont réglés par télécommande sur les valeurs d'atténuation et de déphasage déterminées dans la sixième étape.

le nombre N de stations d'accès satellitaire voisines est égal à 2 ou 3.
les positions des commutateurs de l'ensemble de commutation d'entrée, les positions des commutateurs de l'anneau de commutation de sorties, et les réglages des atténuateurs et des déphaseurs des lignes dérivées d'opposition sont exécutés à partir de l'envoi de télécommandes envoyés par une station de télécommandes et télémesure, intégrée sur le même site que celui de la station d'accès satellitaire GWt,
ou déportée sur un site différent de celui de la station d'accès GWt et reliée à ladite station GWt par une infrastructure terrestre.

La forme d'onde des signaux de test émis par les stations d'accès satellitaire est soit un bruit blanc large bande, soit un peigne de raies, soit des signaux de communication représentatifs du service.

Le procédé selon l'invention comprend une troisième phase de mise en oeuvre du service de communication et une huitième étape dans laquelle
pour i variant de 1 à N, chaque source de réception SRi de l'antenne de réception multi-spots est connectée à la source d'émission SEi correspondante de l'antenne d'émission au travers de la voie répéteur associé VRi, en positionnant les commutateurs de l'ensemble de commutation d'entrée et les commutateurs de l'anneau de sortie, de sorte à obtenir cette configuration d'interconnexion des sources entre elles,
la matrice d'opposition MATi0 ou les matrice d'opposition MATi ayant été réglée(s) dans la première phase et la deuxième phase de sorte à supprimer les interférences créées par les stations d'accès satellitaire voisines GWj voisines de la station d'accès GWi0.

L'invention a également pour objet un système spatial multi-spots pour supprimer les signaux montants interférents générés entre stations d'accès satellitaire géographiquement voisines, et comprenant :
- un satellite de télécommunication incluant une charge utile embarquée de communication multi-spots ; et
- un premier ensemble d'un nombre entier N, supérieur ou égal à 2, de stations d'accès satellitaire GWi, i étant un premier indice entier variant de 1 à N, géographiquement voisines pour créer des interférences entre elles sur au moins un accès satellite ; et
- un deuxième ensemble de terminaux utilisateurs ;

la charge utile de communication multi-spots ayant une ou plusieurs antenne(s) de réception satellite, une antenne d'émission satellite, et N voies répéteur VRi, i variant de 1 à N,
la ou les antenne(s) de réception satellite étant configurée pour recevoir en voie montante dans une bande de fréquence de réception, en même temps et en parallèle depuis N spots voisins de réception SPRi, i variant de 1 à N, N signaux radioélectriques de réception SRi différents, émis respectivement par les stations d'accès satellitaires GWi, chaque station d'accès satellitaire GWi, i variant de 1 à N, étant située dans un unique spot de réception SPRi correspondant, et chaque signal radioélectrique SRi, i variant de 1 à N, étant délivré par une source unique SRRi correspondante au spot réception SPRi de l'antenne de réception ;
l'antenne d'émission satellite étant configurée pour émettre en voie descendante dans une bande de fréquence d'émission, en même temps et en parallèle vers N spots voisins d'émission SPEi, i variant de 1 à N, les N signaux radioélectriques reçus, amplifiés et transposés uniformément en fréquence, Sid, chaque spot d'émission SPEi, i variant de 1 à N, recouvrant la station d'accès satellitaire GWi correspondante, ayant une couverture sensiblement identique à celle du spot de réception SPRi ;
chaque voie répéteur VRi, i variant de 1 à N, étant comprise nominalement entre la source réception SRRi et la source émission SREi de même valeur d'indice i et comportant en aval de la source réception SRRi un amplificateur en réception LNAi et un diviseur RF DIVi à une entrée et N sorties, et un convertisseur abaisseur de transposition, de préférence abaisseur, de fréquences DWNi connecté à une sortie du diviseur RF DIVi,
les terminaux utilisateurs du deuxième ensemble étant répartis sur les N spots d'émission SPEi, i variant de 1 à N ;
le système spatial de communication multi-spots étant caractérisé en ce que :
   - une station d'accès satellite GWt, t étant un entier prédéterminé, compris entre 1 et N, correspondante au spot d'émission satellite SPEt, qui la recouvre, comporte un dispositif de surveillance du spectre de communication CSM ; et
   - la charge utile comporte des commutateurs d'un ensemble de commutation d'entrée, connecté entre des bornes d'entrée de voies répéteur et les sources réception de l'antenne réception, et des commutateurs d'un anneau de sélection de sortie, connecté entre des bornes de sortie des voies répéteur VRi et les sources émission SREi de l'antenne émission ; et
   - la charge utile comprend au moins une matrice d'opposition MATi0, i0 étant un entier prédéterminé et fixé, compris entre 1 et N, à N lignes d'entrées Li0, k, k variant de 1 à N, et une unique borne de sortie, la ligne d'entrée Li0, i0 étant une ligne d'entrée directe, connectée directement à une sortie du diviseur DIVi0, la ou les N-1 lignes d'entrée(s) restante(s) Li0, j, j étant un indice variant de 1 à N et différant de i0, étant des lignes dérivées d'opposition de la matrice d'opposition MATi0, connectée(s) respectivement au(x) diviseur(s) DIVj correspondant(s) en une de leurs sorties, et l'unique borne de sortie de la matrice d'opposition MATi0 étant connectée à la borne d'entrée du convertisseur de transposition de fréquences DWNi0, la matrice d'opposition MATi0 comportant les lignes d'entrées Li0, i et un combineur COMi0 à N entrées/une sortie, alimenté en entrée par les lignes d'entrée Li0, k, k variant de 1 à N, et connecté en sortie à la borne de sortie de la matrice d'opposition, et chaque ligne d'entrée, dérivée d'opposition, Li0, j, j variant de 1 à N et différant de i0, incluant un atténuateur et déphaseur différent contrôlable par télécommande.

Selon des modes particuliers de réalisation, la plateforme relai comprend l'une ou plusieurs des caractéristiques suivantes, prises isolément ou en combinaison :
- la charge utile est configurée pour, dans une deuxième phase postérieure au lancement du satellite et à la mise en service des stations d'accès satellite :
   ** dans une deuxième étape, sélectionner la source d'émission SREt, correspondante au spot d'émission satellite SPEt, connecter la borne de sortie de la matrice d'opposition MATi0 à la source d'émission SREt sélectionnée et déconnecter les sources d'émission restantes SREs, s étant un indice variant de 1 à N et différant de t, en configurant de manière idoine les commutateurs de l'anneau de sélection de sortie ;
   ** dans une troisième étape, connecter la source de réception SRRi0, correspondante du spot de réception SRi0, à la ligne directe d'entrée de la matrice d'opposition MATi0, et déconnecter les sources de réception SRRj, j variant de 1 à N et différent de i0, des N-1 lignes d'entrée dérivées d'opposition Li0, j de la matrice d'opposition MATi0 ;
- la station d'accès satellitaire GWt, de rang t est configurée pour, dans une quatrième étape, recevoir un multiplex de signaux de test, émis par les stations d'accès satellitaire GWk, k variant de 1 à N, du premier ensemble, reçus par la source de réception SRRI0 puis retransmis par la source d'émission SREt, et numériser ledit multiplex en un signal utile d'acquisition ACQi0, i0 ;
- la charge utile est configurée pour, dans une cinquième étape, connecter chaque source de réception restante SRRj, j variant de 1 à N et différent de i0, correspondante au spot de réception SRj recouvrant la station d'accès satellite GWj, à la ligne dérivée d'opposition Li0,j de la matrice d'opposition MATi0, et déconnecter les sources de réception SRRk, k variant de 1 à N et différent de j, des N-1 lignes d'entrée correspondantes Li0, k de la matrice d'opposition MATi0 ; et
- la station d'accès satellitaire GWt est configurée pour ensuite, dans la même cinquième étape, recevoir un multiplex de signaux de test émis par les stations d'accès satellitaire GWk, k variant de 1 à N, reçus par la source de réception SRRi0 et retransmis par la source d'émission SREt, et numériser ledit multiplex en un signal interférent d'acquisition ACQi0, j, et dans une sixième étape faire calculer par le calculateur de surveillance spectrale des signaux de communication reçus, pour chaque signal interférent d'acquisition ACQi0, j, j variant de 1 à N et différent de i0, un coefficient complexe Ci0, j de corrélation entre le signal utile d'acquisition ACQi0, i0 et le signal interférent d'acquisition ACQi0, j, et déterminer à partir du coefficient complexe Ci0, j des valeurs d'atténuation et de déphasage de la ligne d'opposition Li0, j permettant de rejeter le signal interférent généré par GWj sur l'accès en réception répéteur attribué à la station d'accès GWi0 ;
- la charge utile est configurée pour, dans une septième étape, régler les atténuateurs/déphaseurs de la matrice d'opposition MATi0 par télécommande sur les valeurs d'atténuation et de déphasage déterminées dans la sixième étape.
   la charge utile comporte N matrices d'opposition MATi, i variant de 1 à N, à N lignes d'entrées Li, k, k variant de 1 à N, et une unique borne de sortie, la ligne d'entrée Li, i étant une ligne d'entrée directe, connectée directement à une sortie du diviseur DIVi, la ou les N-1 lignes d'entrée(s) restante(s) Li, j, j étant un deuxième indice variant de 1 à N et différant de i, étant des lignes dérivées d'opposition de la matrice d'opposition MATi, connectées) respectivement aux diviseur(s) DIVj correspondants en une de leurs sorties, et l'unique borne de sortie de la matrice d'opposition MATi étant connectée à la borne d'entrée du convertisseur de transposition de fréquences DWNi0, la matrice d'opposition MATi comportant les lignes d'entrées Li,k et un combineur COMi à N entrées/une sortie, alimenté en entrée par les lignes d'entrée Li, k, k variant de 1 à N, et connecté en sortie à la borne de sortie de la matrice d'opposition MATi, et chaque ligne d'entrée, dérivée d'opposition, Li, j, j variant de 1 à N et différant de i, incluant un atténuateur et déphaseur différent contrôlable par télécommande ; et
   la charge utile est configurée pour, après le lancement du satellite et la mise en service des stations d'accès satellite, pour i variant de 1 à N,
- dans une deuxième étape, sélectionner la source d'émission SREt, t étant un entier prédéterminé, compris entre 1 et N, correspondante au spot d'émission satellite Set, recouvrant la station d'accès satellite GWt qui comporte un dispositif de surveillance du spectre de communication, et à connecter la borne de sortie de la matrice d'opposition MATi à la source d'émission SREt sélectionnée et à déconnecter les sources d'émission restantes SEs, s étant un indice variant de 1 à N et différant de t, en configurant de manière idoine les commutateurs de l'anneau de commutation de sortie, connecté entre des bornes de sortie des voies répéteur et les sources émission de l'antenne émission ;
- dans une troisième étape, connecter la source de réception SRRi, correspondante du spot de réception SRi recouvrant la station d'accès satellite GWi, à la ligne directe d'entrée de la matrice d'opposition MATi, et à déconnecter les sources de réception SRRj, j variant de 1 à N et différent de i, des N-1 lignes d'entrée dérivées d'opposition Li, j de la matrice d'opposition MATi ;
- dans une cinquième étape, postérieure à une quatrième étape dans laquelle la station d'accès satellitaire GWt, de rang t, reçoit un multiplex de signaux de test émis par les stations d'accès satellitaire GWk, k variant de 1 à N, du premier ensemble, et reçus par la source de réception SRRi et retransmis par la source d'émission SEt, et numérise ledit multiplex en un signal utile d'acquisition ACQi, i,

pour chaque source de réception restante SRRj, j variant de 1 à N et différent de i, connecter la source de réception SRRj restante, correspondante au spot de réception SRj recouvrant la station d'accès satellite GWj, à la ligne dérivée d'opposition Li, j de la matrice d'opposition MATi, et à déconnecter les sources de réception SRRk, k variant de 1 à N et différent de j, des N-1 lignes d'entrée correspondantes Li, k de la matrice d'opposition MATi.
la station d'accès satellitaire GWt est configurée pour :
   - dans la cinquième étape recevoir un multiplex de signaux de test émis par les stations d'accès satellitaire GWk, k variant de 1 à N, reçus par la source de réception SRRi et retransmis par la source d'émission SEt, et numérise ledit multiplex en un signal interférent d'acquisition ACQi, j ; et
   - dans une sixième étape faire calculer par son calculateur de surveillance spectrale des signaux de communication reçus, pour chaque signal interférent d'acquisition ACQi, j, j variant de 1 à N et différent de i, un coefficient complexe Ci, j de corrélation entre le signal utile d'acquisition ACQi, i et le signal interférent d'acquisition ACQi, j,
et déterminer à partir du coefficient complexe Ci,j des valeurs d'atténuation et de déphasage de la ligne d'opposition Li,j permettant de rejeter le signal interférent généré par la station GWj sur l'accès en réception répéteur attribué à la station d'accès GWi ; et
la charge utile est configurée pour que, dans une septième étape, les atténuateurs/déphaseurs de la matrice d'opposition MATi soient réglés par télécommande sur les valeurs d'atténuation et de déphasage déterminées dans la sixième étape.
le nombre N de stations d'accès satellitaire voisines est supérieur ou égal à 2 et inférieur ou égal à 8,
les positions des commutateurs de l'ensemble de commutation d'entrée, les positions des commutateurs de l'anneau de commutation de sorties, et les réglages des atténuateurs et des déphaseurs des lignes dérivées d'opposition sont exécutées à partir de l'envoi de télécommandes envoyées par une station de télécommandes et télémesure, intégrée sur le même site que celui de la station d'accès satellitaire GWt, ou déportée sur un site différent de celui de la station d'accès GWt et reliée à ladite station GWt par une ou plusieurs liaisons de communication avec ou sans l'utilisation d'une infrastructure terrestre.

L'invention sera mieux comprise à la lecture de la description de plusieurs formes de réalisation qui va suivre, donnée uniquement à titre d'exemple et faite en se référant aux dessins sur lesquels :
[Fig. 1] est une vue de l'architecture générale d'un système spatial multi-spots selon l'invention pour supprimer les signaux interférents générés entre stations d'accès satellitaire et incluant un sous-système réparti bord-sol de suppression desdits signaux interférents ;
[Fig. 2] est une vue de l'architecture d'une première forme de réalisation d'une charge utile d'un satellite de communication multi-spots selon l'invention à deux voies de réception dans laquelle les signaux utile et interférent sont disjoints en fréquence, ce qui correspond à un cas opérationnel facilitant la compréhension ;
[Fig. 3] est une vue de de l'architecture de la première forme de réalisation de la charge utile selon l'invention de la Figure 2 suivant une variante dans laquelle les signaux utile et interférent sont superposés en fréquence, ce qui correspond au cas opérationnel le plus fréquent ;
[Fig. 4] est une vue de l'architecture d'une deuxième forme de réalisation d'une charge utile d'un satellite de communication multi-spots selon l'invention à trois voies réception qui généralise l'architecture à deux voies des Figures 2 et 3, la charge utile étant apte à recevoir les signaux de trois stations d'accès GWs avec pour chaque voie de communication le traitement d'un signal utile d'une station d'accès et de deux signaux interférents correspondants aux deux stations d'accès restantes ;
[Fig. 5] est ordinogramme d'un procédé de suppression selon l'invention d'un signal interférent d'une voie de communication de la charge utile de la Figure 2 ou la Figure 3 ;
[Fig. 6] est une vue de la configuration des commutateurs de sortie de l'anneau de sélection, réalisée dans la deuxième étape du procédé de suppression selon l'invention de la Figure 5, dans le cas où le réglage de la première matrice d'opposition est recherché ;
[Fig. 7] est une vue de la configuration des commutateurs d'entrée de l'ensemble de commutation d'entrée ainsi qu'une vue des niveaux des signaux utile et interférent à l'entrée et à la sortie de la première matrice d'opposition de l'accès de la première station d'accès GW1 après exécution des troisième et quatrième étapes du procédé de suppression du signal interférent de la Figure 5 ;
[Fig. 8] est une vue des de la configuration des commutateurs d'entrée de l'ensemble de commutation d'entrée ainsi qu'une vue des niveaux des signaux utile et interférent à l'entrée et à la sortie de la première matrice d'opposition de la voie de communication correspondant à la première station d'accès GW1 après exécution de la cinquième étape du procédé de suppression du signal interférent de la Figure 5 ;
[Fig. 9] est une vue de l'effet du procédé de suppression après la mise en oeuvre des sixième et septième étapes du procédé de suppression du signal interférent de la Figure 5 ;
[Fig. 10] est une vue de la configuration des commutateurs de sortie de l'anneau de sélection, réalisée dans la deuxième étape du procédé de suppression selon l'invention de la Figure 5, dans le cas où le réglage de la première matrice d'opposition est déterminé ;
[Fig. 11] est une vue de la configuration des commutateurs d'entrée de l'ensemble de commutation d'entrée ainsi qu'une vue des niveaux des signaux utile et interférent à l'entrée et à la sortie de la deuxième matrice d'opposition de la voie de communication correspondant à la deuxième station d'accès GW2 après exécution des troisième et quatrième étapes du procédé de suppression du signal interférent de la Figure 5 ;
[Fig. 12] est une vue de la configuration des commutateurs d'entrée ainsi qu'une vue des signaux utile et interférent à l'entrée et à la sortie de la deuxième matrice d'opposition de la voie de communication correspondant à la deuxième station d'accès GW2 après exécution de la cinquième étape du procédé de suppression du signal interférent de la Figure 5 ;
[Fig. 13] est un ordinogramme d'un procédé général selon l'invention de suppression d'un nombre quelconque N de signaux interférents montants.

Afin de garantir le niveau requis d'isolation entre les stations d'accès satellitaire GWs pour des espacements bien inférieurs à deux fois le diamètre d'un spot (correspondant à un faisceau), un système spatial de communication multi-spots selon l'invention est configuré pour supprimer les signaux interférents montants, par la mise en oeuvre d'un sous-système de suppression, réparti bord-sol entre le segment bord, i.e. le satellite et sa charge utile, et le segment sol, i.e. les stations d'accès satellitaire, le principe de base de l'invention étant de calculer une loi de formation de faisceaux qui permette de créer un ou plusieurs « trou(s) » ou « évanouissement(s) » de gain dans la direction d'un signal ou plusieurs signaux interférent(s).

Le sous-système de suppression selon l'invention est basé d'une part sur l'utilisation connue au sein de la charge utile d'une ou plusieurs matrices d'opposition, composées chacune d'atténuateurs, déphaseurs et coupleurs qui permettent d'apporter un complément de réjection.

Le sous-système de suppression selon l'invention est basé d'autre part sur la mise en oeuvre d'une méthode de calcul au sol de la loi d'opposition, laquelle loi est appliquée ensuite dans la ou les matrices d'opposition, permise grâce à l'insertion judicieuse de commutateurs (en anglais « switches ») en entrée et en sortie du répéteur afin d'aiguiller les signaux utiles et interférents vers une station d'accès GW, contenant un moniteur du spectre de communication CSM (en anglais « Communication Spectrum Monitoring »). Le moniteur CSM permet de numériser les signaux reçus et, à l'aide d'un calculateur, un traitement numérique est appliqué aux signaux numérisés pour extraire une loi d'opposition (amplitude/phase) et permettre ainsi l'annulation des signaux interférents présents sur la voie de réception du répéteur par laquelle transite le signal utile de la station d'accès GW. Le traitement est répété pour toutes les stations d'accès satellitaire GWs actives du système spatial de communication multi-spots. Ensuite une télécommande TC contenant les commandes Amplitude/Phase pour chaque station d'accès GW est envoyée au satellite pour configurer la charge utile et apporter ainsi le complément de réjection souhaité pour chaque GW du système.

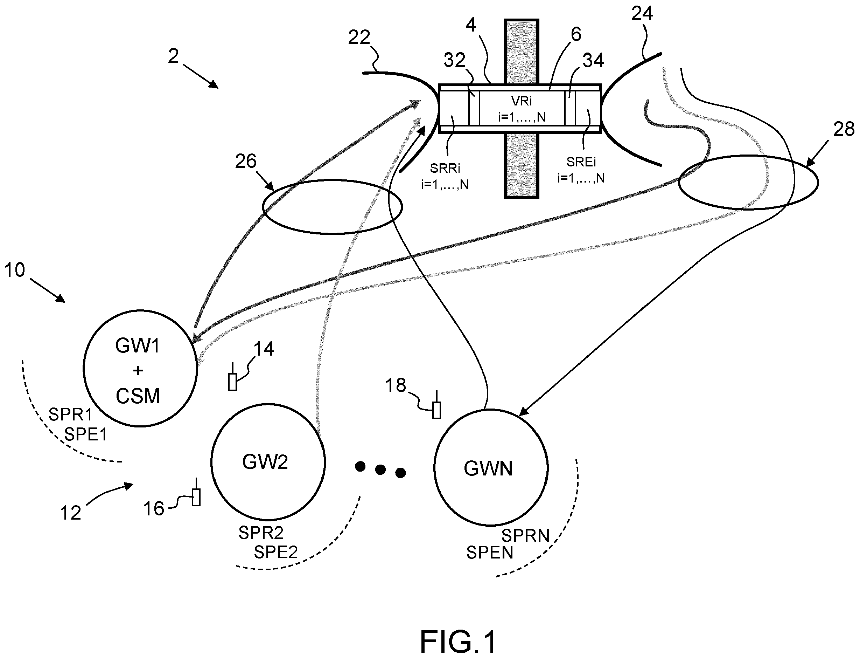

Suivant la Figure 1, un système spatial de communication multi-spots 2 est configuré pour supprimer les signaux interférents montants, générés entre stations d'accès satellitaire, géographiquement voisines.

Le système spatial comprend :
- un satellite de télécommunication 4 incluant une charge utile embarquée 6 de communication multi-spots ;
- un premier ensemble 10 d'un nombre entier N, supérieur ou égal à 2, de stations d'accès satellitaire GWi, i étant un premier indice entier variant de 1 à N, géographiquement voisines pour créer des interférences entre elles sur au moins un accès satellite ; et
- un deuxième ensemble 12 de terminaux utilisateurs 14, 16, 18.

La charge utile de communication multi-spots 6 comporte une antenne de réception satellite 22, une antenne d'émission satellite 24, et N voies répéteur VRi, i variant de 1 à N,

L'antenne de réception satellite 22 est configurée pour recevoir en voie montante 26 dans une même bande de fréquence de réception, en même temps et en parallèle depuis N spots voisins de réception SPRi, i variant de 1 à N, N signaux radioélectriques de réceptions SRi différents, émis respectivement par les stations d'accès satellitaires GWi, chaque station d'accès satellitaire GWi, i variant de 1 à N, étant située dans un unique spot de réception SPRi correspondant, et chaque signal radioélectrique SRi, i variant de 1 à N, étant délivré par une source unique SRRi correspondante au spot réception SPRi de l'antenne de réception 22.

L'antenne d'émission satellite 24 est configurée pour émettre en voie descendante 28 dans une même bande de fréquence d'émission, en même temps et en parallèle vers N spots voisins d'émission SPEi, i variant de 1 à N, les N signaux radioélectriques reçus, amplifiés et abaissés uniformément en fréquence, Sid, chaque spot d'émission SPEi, i variant de 1 à N, recouvrant la station d'accès satellitaire GWi correspondante, ayant une couverture sensiblement identique à celle du spot de réception SPRi.

Chaque voie répéteur VRi, i variant de 1 à N, est comprise nominalement entre la source réception SRRi et la source émission SREi de même valeur d'indice i et comportant en aval de la source réception SRRi, non représentés sur la Figure 1, un amplificateur en réception LNAi et un diviseur RF DIVi à une entrée et N sorties, et un convertisseur de transposition, de préférence abaisseur, de fréquences DWNi connecté à une sortie du diviseur RF DIVi.

Les terminaux utilisateurs 14, 16, 18 du deuxième ensemble 12 sont répartis dans les N spots de réception SPRi, i variant de 1 à N.

Au moins une station d'accès satellite GWt, t étant un entier prédéterminé, compris entre 1 et N, correspondante au spot d'émission satellite SPEt, qui la recouvre, comporte un dispositif de surveillance ou moniteur du spectre de communication CSM. Ici et à titre d'exemple sur la Figure 1, la station d'accès satellitaire GW1.

La charge utile 6 comporte des commutateurs d'un ensemble de commutation d'entrée 32, connectés entre des accès d'entrée de voies répéteur et les sources réception SRRi, i variant de 1 à N, de l'antenne de réception 22, et des commutateurs d'un anneau de sélection de sortie 34, connecté entre des accès de sortie des voies répéteur et les sources émission SREi de l'antenne émission 24.

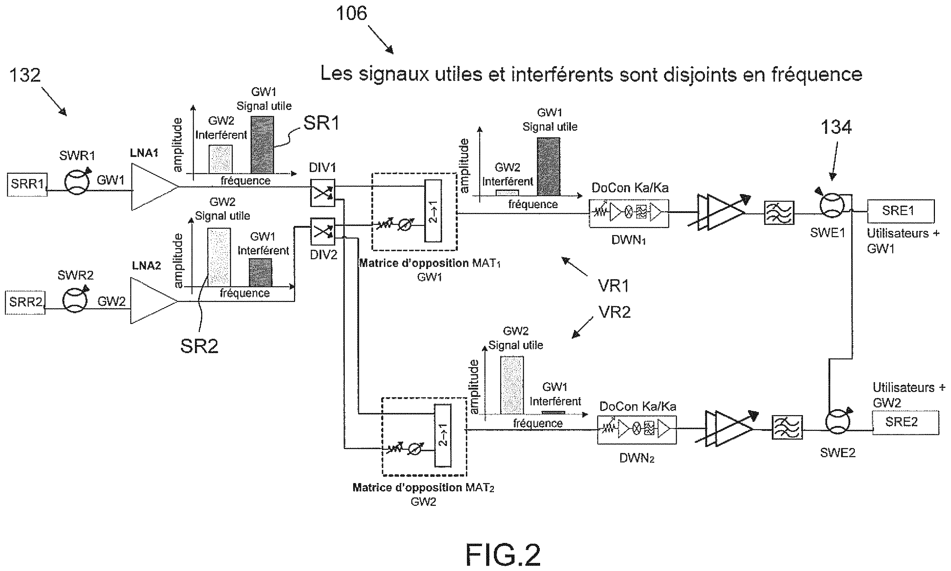

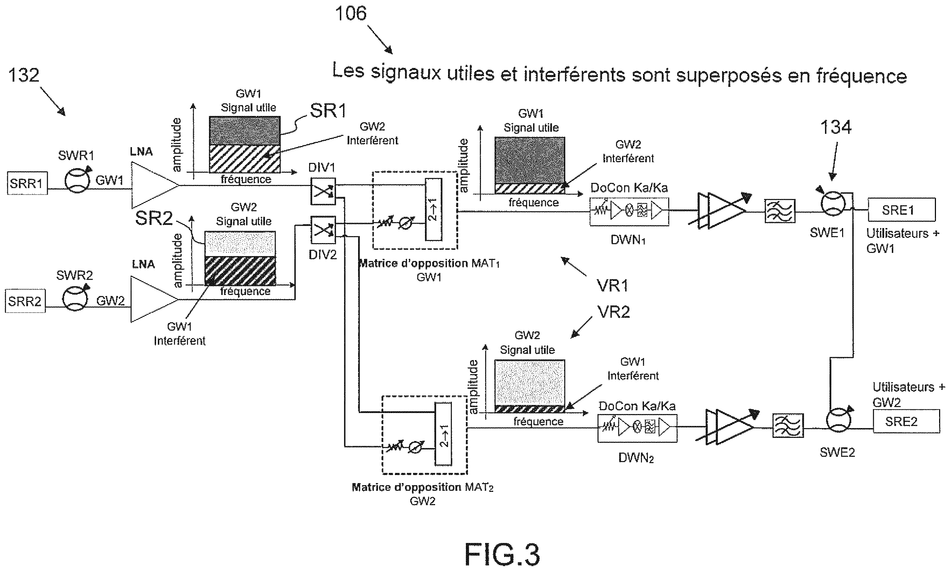

Suivant les Figures 2 et 3, la charge utile de communication multi-spots, désignée par la référence numérique 106, comporte deux voies répéteur VR1 et VR2 correspondant respectivement au transit du signal utile SR1 reçu de la station d'accès GW1 et du signal utile SR2 de la station d'accès GW2.

Chaque voie répéteur VRi, i variant de 1 à 2, est comprise nominalement entre la source réception SRRi et la source émission SREi de même valeur d'indice i et comportant en aval de la source réception SRRi, un amplificateur en réception ARi et un diviseur RF DIVi à une entrée et un nombre NSDIVi de sorties, supérieur ou égal 2 et inférieur ou égal à N, et un convertisseur de transposition, de préférence abaisseur, de fréquences DWNi connecté à une sortie du diviseur RF DIVi.

La charge utile 106 comprend ici, pour i variant de 1 à 2, une matrice d'opposition MATi à deux lignes d'entrées Li,k, k variant de 1 à 2, et une unique borne de sortie, la ligne d'entrée Li,i étant une ligne d'entrée directe, connectée directement à une sortie du diviseur DIVi, la ligne d'entrée restante Li, j, j étant un indice variant de 1 à 2 et différant de i, étant la ligne dérivée d'opposition de la matrice d'opposition MATi, connectée respectivement au diviseur DIVj correspondant à une de leurs sorties, et l'unique borne de sortie de la matrice d'opposition MATi étant connectée à la borne d'entrée du convertisseur de transposition, de préférence abaisseur, de fréquences DWNi. La matrice d'opposition MATi comporte les deux lignes d'entrées Li, k, k variant de 1 à 2, et un combineur COMi, à deux entrées/une sortie, alimenté en entrée par les lignes d'entrée Li, k, k variant de 1 à 2, et connecté en sortie à la borne de sortie de la matrice d'opposition MATi, et chaque ligne d'entrée, dérivée d'opposition, Li, j, j variant de 1 à 2 et différant de i, inclut un atténuateur et déphaseur différent contrôlable par télécommande.

La charge utile 106 comporte deux commutateurs SWRi, i variant de 1 à 2, d'un ensemble de commutation d'entrée 132, connectées entre des bornes d'entrée de voies répéteur et les deux sources réception SRRi, i variant de 1 à 2, de l'antenne de réception 22, ici en amont des deux amplificateurs à faible bruit de réception LNA1 et LNA2, et des commutateurs SWEi d'un anneau de sélection de sortie 134, connecté entre des bornes de sortie des voies répéteur VRi et les sources émission SREi de l'antenne émission 24, i variant de 1 à 2.

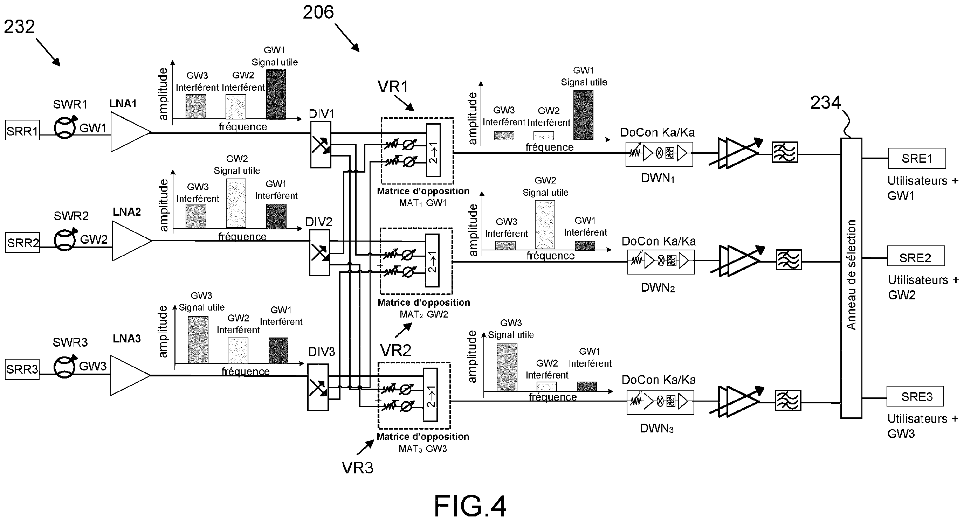

Suivant la Figure 4, la charge utile de communication multi-spots, désignée par la référence numérique 206, comporte trois voies répéteur VR1, VR2 et VR3 correspondant respectivement au transit du signal utile reçu de la station d'accès GW1, du signal utile reçu de la station d'accès GW2 et du signal utile reçu de la station d'accès GW3.

Chaque voie répéteur VRi, i variant de 1 à 3, est comprise nominalement entre la source réception SRRi et la source émission SREi de même valeur d'indice i et comportant en aval de la source réception SRRi, un amplificateur en réception LNAi et un diviseur RF DIVi à une entrée et un nombre NSDIVi de sorties égal 3, et un convertisseur de transposition, de préférence abaisseur, de fréquences DWNi connecté à une sortie du diviseur RF DIVi.

La charge utile 206 comprend ici, pour i variant de 1 à 3, une matrice d'opposition MATi à trois lignes d'entrées Li, k, k variant de 1 à 3, et une unique borne de sortie, la ligne d'entrée Li,i étant une ligne d'entrée directe, connectée directement à une sortie du diviseur DIVi, la ou les deux lignes d'entrée(s) restante(s) Li, j, j étant un indice variant de 1 à 3 et différant de i, étant des lignes dérivées d'opposition de la matrice d'opposition MATi, connectée(s) respectivement au(x) diviseur(s) DIVj correspondant(s) en une de leurs sorties, et l'unique borne de sortie de la matrice d'opposition MATi étant connectée à la borne d'entrée du convertisseur abaisseur de fréquences DWNi. La matrice d'opposition MATi, i variant de 1 à 3, comporte les trois lignes d'entrées Li, k, k variant de 1 à 3, et un combineur COMi, à trois entrées/une sortie, alimenté en entrée par les lignes d'entrée Li, k, k variant de 1 à 3, et connecté en sortie à la borne de sortie de la matrice d'opposition MATi, et chaque ligne d'entrée, dérivée d'opposition, Li, j, j variant de 1 à N et différant de i, inclut un atténuateur et déphaseur différent contrôlable par télécommande.

La charge utile 206 comporte trois commutateurs d'entrée SWRi, i variant de 1 à 3, d'un ensemble de commutation d'entrée 232, connectées entre des bornes d'entrée de voies répéteur VRi et les trois sources de réception SRRi, i variant de 1 à 3, de l'antenne de réception 22, ici en amont des trois amplificateurs à faible bruit de réception LNA1, LNA2 et LNA3, et des commutateurs de sortie SWEi d'un anneau de sélection de sortie 234, connecté entre des bornes de sortie des voies répéteur VRi et les sources émission SREi de l'antenne émission 24, i variant de 1 à 3.

La suppression des signaux interférents est réalisée à l'aide des diviseurs, des atténuateur et déphaseurs et sommateurs des matrices d'opposition, et des commutateurs de l'ensemble de commutation d'entrée et de l'anneau de sélection de sortie, judicieusement placés pour permettre le calcul au sol de la loi qui permet de supprimer les interférents.

Les commutateurs en entrée et en sortie permettent d'isoler et de récupérer au niveau sol dans une même station d'accès, ici la station GW1, tous les signaux qu'on souhaite traiter.

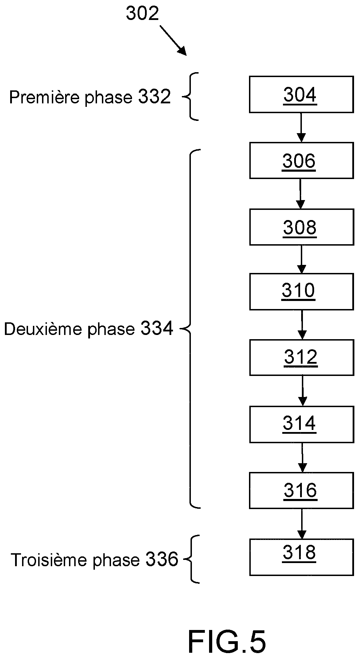

Suivant la Figure 5, un procédé 302 selon l'invention de suppression de signaux interférents montants, générés entre deux stations d'accès satellitaire géographiquement voisines GW1 et GW2, met en oeuvre un calcul de la loi de formation de faisceaux au sol en utilisant le dispositif de surveillance du spectre de communication CSM, implémenté dans la station d'accès GW1 comme décrit dans la Figure 1, et la charge utile 106 selon l'architecture décrite dans les Figures 2 et 3.

Le procédé de suppression des signaux interférents 302 comprend un ensemble d'étapes 304, 306, 308, 310, 312, 314, 316, 318 exécutées séquentiellement.

La mise en oeuvre du procédé de suppression des signaux interférents 302 pour supprimer le signal interférent présent sur un accès GWi0 utile choisi, i0 compris entre 1 et 2, se fait en trois phases successives une première phase 332 exécutée avant le lancement du satellite et la mise en service des stations d'accès GW1 et GW2, une deuxième phase 334 de détermination des paramètres de réglage de la matrice d'opposition MATi0 de l'accès GWi0 utile choisi, rang i0, et une troisième phase 336 de mise en service des communications avec la ou les matrices d'opposition réglées.

Dans un premier cas où le réglage de la première matrice MAT1 sur l'accès de la première station GW1 est recherché, la première station d'accès GW1 est dite « utile » et la deuxième station d'accès GW2 est dite « interférente ».

Dans ce premier cas, on va chercher à rejeter voire annuler le signal interférent de GW2 présent sur l'accès satellite de la station GW1, c'est à dire la source d'antenne SRR1 de réception et la voie répéteur VR1.

La première étape 304, exécutée pendant la première phase 332, correspond à la réalisation de la charge utile du satellite telle que décrite dans les Figures 2 et 3, et en particulier l'implantation de la matrice d'opposition MAT1 de la voie répéteur VR1 de la charge utile.

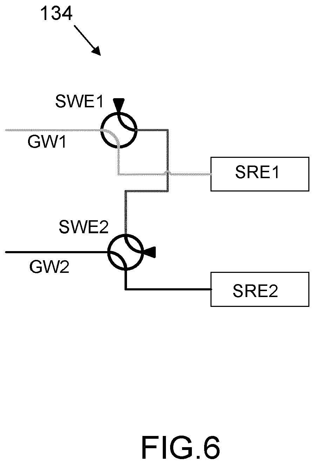

Dans la deuxième étape 306, partie de la deuxième phase 334, les commutateurs de sortie SWE1 et SWE2 de l'anneau de sélection 134 sont configurés comme présenté sur la Figure 6 pour connecter la voie répéteur VR1 à la source émission SRE1 et la voie répéteur VR2 à la source émission SRE2.

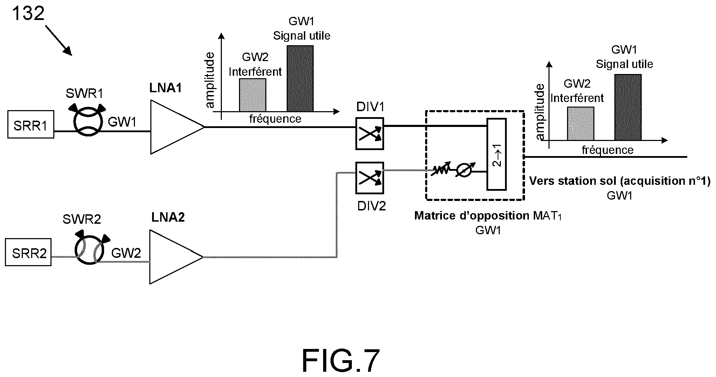

Dans la troisième étape 308, partie de la deuxième phase 334, on tourne le commutateur d'entrée SWR2 de l'accès GW2 de VR2 en position OFF et le commutateur d'entrée de l'accès GW1 en position ON comme présenté sur la Figure 7. Dans cette troisième étape 308, seulement le multiplex de signaux reçus sur la source SRR1 de GW1 est transmis vers le sol afin d'être numérisé.

Dans la quatrième étape 310, la station d'accès satellitaire GW1 reçoit le multiplex de signaux de test émis par les stations d'accès GW1 utile et GW2 interférente, et reçus par la source de réception SRR1 et retransmis par la source émission SRE1, et numérise ledit multiplex en un premier signal utile d'acquisition ACQ1,1.

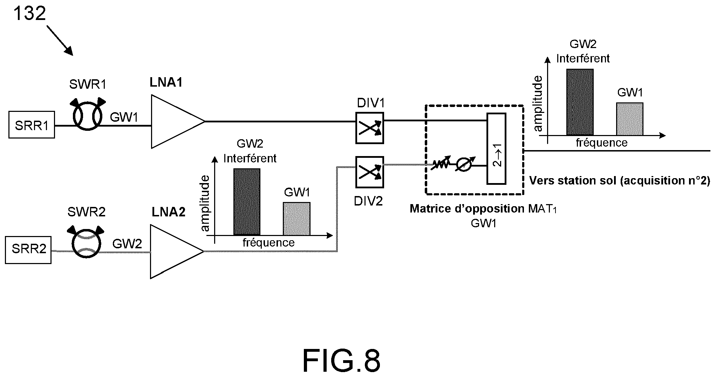

Ensuite dans la cinquième étape 312, partie de la deuxième phase 334, on tourne le commutateur d'entrée SWR2 de l'accès GW2 en position ON et le commutateur de l'accès GW1 en position OFF comme représenté sur la Figure 8. Dans cette cinquième étape 312, seulement le multiplex de signaux reçus sur la source de réception SRR2 de la deuxième station d'accès GW2 est transmis vers le sol afin d'être numérisé. La station d'accès GW1 reçoit le multiplex de signaux de test émis par les stations d'accès GW1 et GW2, reçus sur la source de réception SRR2 et retransmis par la source d'émission SRE1, et numérise ledit multiplex en un deuxième signal interférent d'acquisition ACQ1,2.

Puis dans la sixième étape 314, partie de la deuxième phase 334, on calcule au sol par corrélation entre les deux signaux d'acquisition un coefficient complexe C1,2 qui permettra de rejeter le signal interférent de GW2 présent sur l'accès de la première station d'accès GW1.

Ensuite dans la septième étape 316, partie de la deuxième phase 334, la station sol d'accès GW1 envoie une télécommande TC qui permet de configurer l'atténuateur déphaseur de la matrice d'opposition MAT1 de la station d'accès GW1.

Puis dans la huitième étape 318, partie de la troisième phase 336, la station sol d'accès GW1 envoie une télécommande TC qui permet de mettre les commutateurs d'entrée SWR1, SWR2 de l'ensemble de commutation d'entrée 132 en position ON, et les commutateurs de sortie de l'anneau de sélection 134 dans les positions du service opérationnel de communication, comme illustré sur les Figure 2 et 3.

La matrice d'opposition MAT1 ainsi réglée permet de faire une sommation vectorielle entre le signal issu de la première station d'accès GW1 et celui issu de la deuxième station d'accès GW2. Le coefficient complexe calculé dans la sixième étape 314 permet de sommer en opposition le signal interférent présent sur l'accès SRR1 (i.e. correspondant à la station d'accès GW2) avec sa réplique provenant de l'accès SRR2.

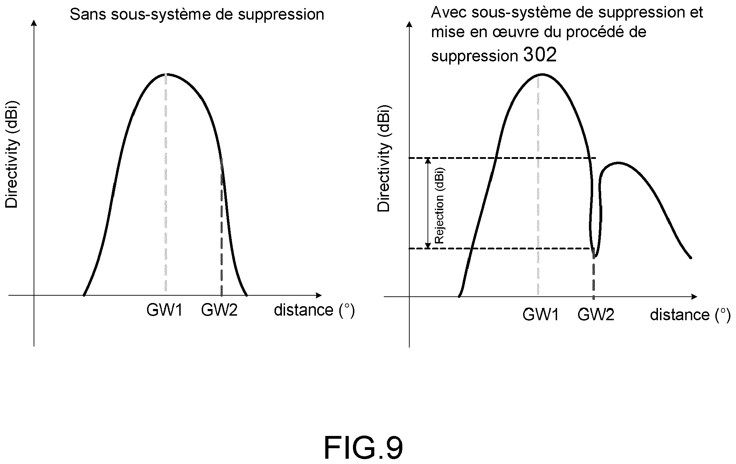

Le signal interférent de GW2 sur l'accès SRR1 de la première station GW1 est maintenant suffisamment rejeté pour atteindre le rapport C/I de puissance du signal utile sur la puissance du signal interférent requis par le système de communication multi-spot comme illustré sur la Figure 9.

Dans un deuxième cas où le réglage de la deuxième matrice d'opposition MAT2 sur l'accès de la deuxième station GW2 est recherché, la deuxième station d'accès GW2 est dite « utile » et la première station d'accès GW1 est dite « interférente ».

Dans ce deuxième cas, on va chercher à rejeter voire annuler le signal interférent de GW1 présent sur l'accès satellite de la station GW2, c'est à dire la source d'antenne SRR2 de réception et la voie répéteur VR2.

De manière similaire au premier, le procédé 302 de suppression des signaux interférents décrits dans la Figure 5 est appliqué.

Dans ce deuxième cas, la mise en oeuvre de la première étape 304, exécutée pendant la première phase 332, comporte l'implantation de la matrice d'opposition MAT2 de la voie répéteur VR2 de la charge utile 106 telle que décrite dans les Figures 2 et 3.

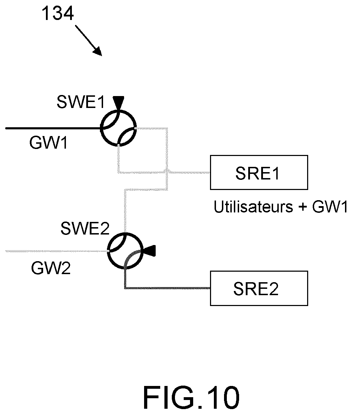

Dans la deuxième étape 306, ici les commutateurs de sortie de l'anneau de sélection 134 sont configurés comme présenté sur la Figure 10 pour aiguiller les signaux issus de la matrice d'opposition MAT2 de la GW2 vers la station sol GW1 de calcul. La voie répéteur VR2, incluant la deuxième matrice d'opposition MAT2, est connectée à la source d'émission SRE1 au travers des commutateurs SWE2 et SWE1 tandis que la voie répéteur VR1 est déconnectée de la source d'émission SRE1.

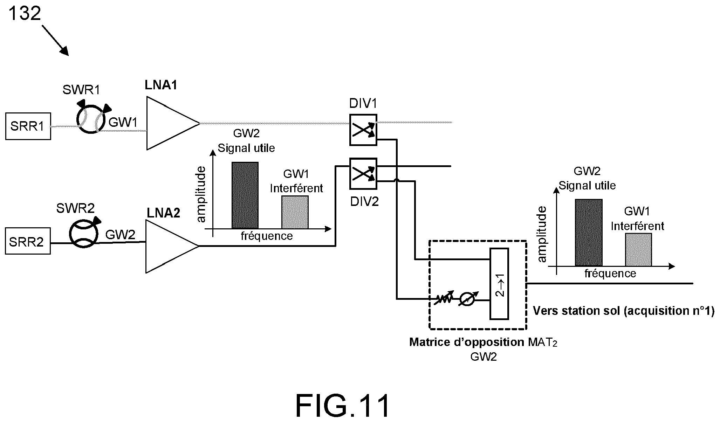

Dans la troisième étape 308, ici on tourne le premier commutateur d'entrée SWR1 de l'accès GW1 de VR1 en position OFF et le deuxième commutateur d'entrée SWR2 de l'accès GW2 de VR2 en position ON comme présenté sur la Figure 11. Dans cette troisième étape 306, seulement le multiplex de signaux reçus sur la source SRR2 de GW2 est transmis vers le sol afin d'être numérisé.

Dans la quatrième étape 310, ici la station d'accès satellitaire GW1 reçoit le multiplex de signaux de test émis par les stations d'accès GW1 interférente et GW2 utile, et reçus par la source de réception SRR2 et retransmis par la source émission SRE1, et numérise ledit multiplex en un premier signal utile d'acquisition ACQ2, 2.

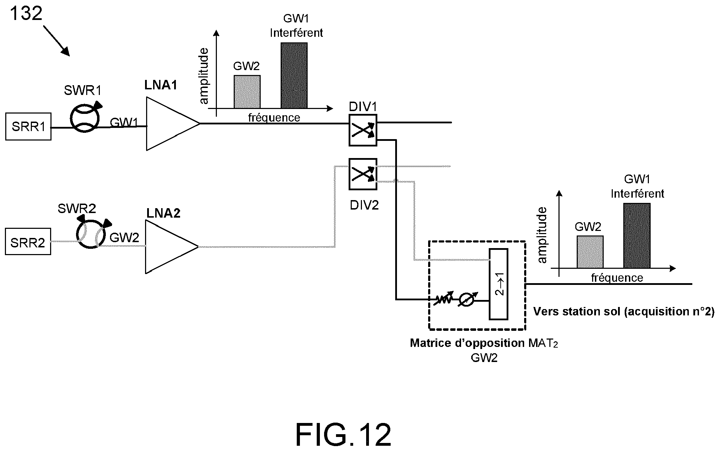

Dans la cinquième étape 312, ici on tourne le commutateur d'entrée SWR1 de l'accès GW1 en position ON et le commutateur d'entrée SWR2 de l'accès GW2 en position OFF comme présenté sur la Figure 12. Dans cette cinquième étape 312, seulement le multiplex de signaux reçus sur la source SRR1 de la station d'accès GW1 interférente est transmis vers le sol afin d'être numérisé. La station d'accès GW1 reçoit le multiplex de signaux de test émis par les stations d'accès GW1 et GW2, reçus sur la source de réception SRR1 et retransmis par la source d'émission SRE1, et numérise ledit multiplex en un deuxième signal interférent d'acquisition ACQ2, 1.

Dans la sixième étape 314, ici on calcule au sol par corrélation entre les deux signaux d'acquisition un coefficient complexe C2,1 qui permettra de rejeter le signal interférent de GW1 présent sur l'accès de la deuxième station d'accès GW2 utile.

Dans la septième étape 316, ici la station sol d'accès GW1 envoie une télécommande TC qui permet de configurer l'atténuateur et déphaseur de la matrice d'opposition MAT2 de la station d'accès GW2.

Dans la huitième étape 318, ici la station sol d'accès GW1 envoie une télécommande TC qui permet de mettre les commutateurs d'entrée SWR1, SWR2 de l'ensemble de commutation d'entrée 132 en position ON, et les commutateurs de sortie de l'anneau de sélection 134 dans les positions du service opérationnel de communication, comme illustré sur les Figure 2 et 3.

La matrice d'opposition MAT2 ainsi réglée permet de faire une sommation vectorielle entre le signal issu de la première station d'accès GW1 et celui issu de la deuxième station d'accès GW2. Le coefficient complexe calculé dans la sixième étape 314 permet de sommer en opposition le signal interférent présent sur l'accès SRR2 (i.e. correspondant à la station d'accès GW1) avec sa réplique provenant de l'accès SRR1.

Le signal interférent de GW1 sur l'accès SRR2 de la deuxième station GW2 est maintenant suffisamment rejeté pour atteindre le rapport C/I GW requis par le système spatial de communication multi-spots.

Le procédé de suppression de signaux interférents à deux stations d'accès peut être généralisé au cas d'un système spatial de communication multifaisceaux ayant plusieurs stations d'accès GWs actives, c'est-à-dire un nombre N quelconque, supérieur ou égal à 2, de stations d'accès satellitaire GWi, composées d'une station d'accès GWi0 utile et de N-1 stations d'accès interférentes GWj, j variant de 1 à N et j différent de i0.

Il est à remarquer que, dans la pratique, lorsqu'on rencontre des problèmes d'interférences entre des stations d'accès satellitaires GWs d'un système de communication multi-spots, la dégradation du C/I GW est très souvent dû à un voire deux interférents au maximum.

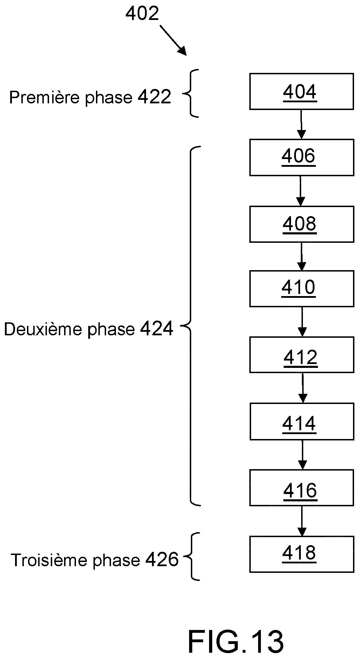

Suivant la Figure 13 et de manière générale, un procédé 402 de suppression de signaux interférents montants, générés entre un nombre N, supérieur ou égal à 2, de stations d'accès satellitaire GWi, i variant de 1 à N, géographiquement voisines et faisant partie d'un système spatial de communication multi-spots, comprend des première, deuxième, troisième, quatrième, cinquième, sixième, septième et huitième étapes 404, 406, 408, 410, 412, 414, 416, 418, exécutées successivement.

Dans une première phase 422 avant lancement du satellite et la première étape 404, pour un entier i0 prédéterminé et fixé, pris parmi les entiers compris entre 1 et N, une matrice d'opposition MATi0 à N lignes d'entrées Li0, k, k variant de 1 à N, et une unique borne de sortie est connectée en permanence en son entrée aux diviseurs DIVi, i variant de 1 à N, et en sortie au convertisseur de transposition de fréquences DWNi0.

La ligne d'entrée Li0, i0 est une ligne d'entrée directe, connectée directement à une sortie du diviseur DIVi0, la ou les N-1 lignes d'entrée(s) restante(s) Li0, j, j étant un indice variant de 1 à N et différant de i0, étant des lignes dérivées d'opposition de la matrice d'opposition MATi0, connectée(s) respectivement au(x) diviseur(s) DIVj correspondant(s) en une de leurs sorties. L'unique borne de sortie de la matrice d'opposition MATi0 est connectée à la borne d'entrée du convertisseur de transposition de fréquences DWNi0. La matrice d'opposition MATi0 comporte les lignes d'entrées Li0, k, k variant de 1 à N, et un combineur COMi0 à N entrées/une sortie, alimenté en entrée par les lignes d'entrée Li0, k, k variant de 1 à N, et connecté en sortie à la borne de sortie de la matrice d'opposition. Chaque ligne d'entrée, dérivée d'opposition, Li0,j, j variant de 1 à N et différant de i0, inclut un atténuateur et déphaseur différent contrôlable par télécommande.

Puis, dans une deuxième phase 424, exécutée après le lancement du satellite et la mise en service des stations d'accès satellite, au cours de la deuxième étape 406 une source d'émission SREt, t étant un entier prédéterminé, compris entre 1 et N, correspondante au spot d'émission satellite SPEt, recouvrant la station d'accès satellite GWt qui comporte un dispositif de surveillance du spectre de communication CSM, est sélectionnée, et la borne de sortie de la matrice d'opposition MATi0 est connectée à la source d'émission SREt sélectionnée, tandis que les sources d'émission restantes SEs, s étant un indice variant de 1 à N et différant de t, sont déconnectées en configurant de manière idoine les commutateurs de l'anneau de sélection de sortie, connecté entre les bornes de sortie des voies répéteur VRi, i variant de 1 à N, les sources émission SREi, i variant de 1 à N, de l'antenne émission.

Ensuite dans la troisième étape 408, partie de la deuxième phase 424, la source de réception SRRi0, correspondante du spot de réception SPRi0 recouvrant la station d'accès satellite GWi0, est connectée à la ligne directe d'entrée de la matrice d'opposition MATi0, et les sources de réception SRRj, j variant de 1 à N et différent de i0, sont déconnectées des N-1 lignes d'entrée dérivées d'opposition Li0, j de la matrice d'opposition MATi0.

Puis dans la deuxième phase 424 et la quatrième étape 410, la station d'accès satellitaire GWt, de rang t, reçoit un multiplex de signaux de test émis par les stations d'accès satellitaire GWk, k variant de 1 à N, du premier ensemble, et reçus par la source de réception SRRI0 et retransmis par la source d'émission SEt, et numérise ledit multiplex en un signal utile d'acquisition ACQi0, i0.

Ensuite dans la cinquième étape 412, partie de la deuxième phase 424, pour chaque source de réception restante SRRj, j variant de 1 à N et différent de i0,
- la source de réception SRRj restante, correspondante au spot de réception SPRj recouvrant la station d'accès satellite GWj, est connectée à la ligne dérivée d'opposition Li0, j de la matrice d'opposition MATi0, et les sources de réception SRRk, k variant de 1 à N et différent de j, sont déconnectées des N-1 lignes d'entrée correspondantes Li0, k de la matrice d'opposition MATi0 ; puis
- la station d'accès satellitaire GWt reçoit un multiplex de signaux de test émis par les stations d'accès satellitaire GWk, k variant de 1 à N, reçus par la source de réception SRRi0 et retransmis par la source d'émission SREt, et numérise ledit multiplex en un signal interférent d'acquisition ACQi0, j.

Puis, dans la sixième étape 414, partie de la deuxième phase 424, la station satellitaire GWt fait calculer par le calculateur de surveillance spectrale CSM des signaux de communication reçus, pour chaque signal interférent d'acquisition ACQi0, j, j variant de 1 à N et différent de i0, un coefficient complexe Ci0,j de corrélation entre le signal utile d'acquisition ACQi0, i0 et le signal interférent d'acquisition ACQi0, j, et déterminer à partir du coefficient complexe Ci0, j des valeurs d'atténuation et de déphasage de la ligne d'opposition Li0,j permettant de rejeter le signal interférent généré par GWj sur l'accès en réception répéteur attribué à la station d'accès GWi0.

Ensuite, dans la septième étape 416, partie de la deuxième phase 424, les atténuateurs/déphaseurs de la matrice d'opposition MATi0 sont réglés par télécommande TC sur les valeurs d'atténuation et de déphasage déterminées dans la sixième étape 414.

Puis dans une troisième phase 426 de mise en oeuvre du service de communication et la huitième étape 418, pour i variant de 1 à N, chaque source de réception SRRi de l'antenne de réception multi-spots est connectée à la source d'émission SREi correspondante de l'antenne d'émission au travers de la voie répéteur associé VRi, par le positionnement idoine des commutateurs de l'ensemble de commutation d'entrée et ses commutateurs de l'anneau de sélection de sortie, permettant d'obtenir la configuration du service de communication, la matrice d'opposition MATi0 ayant été réglé dans la première phase et la deuxième phase de sorte à supprimer les signaux interférents, créés par les stations d'accès satellitaire GWj voisines de la station d'accès GWi0.

Le procédé de suppression des signaux interférents montants et le système de communication multi-spots qui met en oeuvre ledit procédé de suppression, tels que décrits-ci-dessus, permettent de réduire le matériel nécessaire à la suppression des signaux interférents, permettant de limiter l'impact sur les bilans de la charge utile en termes de masse, consommation et dissipation, tout en offrant une grande souplesse aux opérateurs sur le choix de la localisation des stations d'accès satellitaire GWs jusqu'à une phase très tardive après le démarrage du développement du système de communication multi-spots.

Les positions des commutateurs de l'ensemble de commutation d'entrée, les positions des commutateurs de l'anneau de sélection de sortie, et les réglages des atténuateurs et des déphaseurs des lignes dérivées d'opposition sont par exemple exécutés à partir de l'envoi de télécommandes TC envoyées par une station de télécommandes et télémesure, intégrée sur le même site que celui de la station d'accès satellitaire GWt, ou déportée sur un site différent de celui de la station d'accès GWt et reliée à ladite station GWt par une infrastructure terrestre.

La forme d'onde des signaux de test émis par les stations d'accès satellitaire peut être soit un bruit blanc large bande, soit un peigne de raies, soit la forme d'onde des signaux de communication représentatifs du service.

Le procédé et le sous-système de suppression des signaux interférents montants s'appliquent principalement aux systèmes de communication multi-spots Ka et Ku qui forment aujourd'hui la majeure partie des satellites géostationnaires GEO.

Le procédé et le sous-système de suppression des signaux interférents montants selon l'invention peuvent également être utilisés pour la calibration d'une charge utile depuis le sol.

Si un des sites des stations d'accès met en oeuvre une boucle de retour (en anglais «loop back») du signal transmis par la station d'accès et une corrélation entre le signal émis et le signal reçu pour extraire une amplitude/phase et envoie par la suite une télécommande TC au satellite pour reconfigurer la charge utile avec ces informations alors le calcul de la loi d'opposition peut être effectué au sol avec le procédé de suppression décrit ci-dessus selon l'invention.

Cette invention permet de garantir de bonnes performances système en réduisant les interférences entre les stations d'accès satellitaire actives d'un système spatial de communication multi-spots, sans être tributaire de leur localisation et ce à un coût faible et un impact quasi-transparent sur la charge utile en termes de masse, de consommation et de dissipation.

Il est à remarquer que le système de commutateurs de sortie de l'anneau de sélection peut être remplacé par la génération d'un faisceau contenant les signaux à traiter, qui pointe sur la station sol qui héberge le CSM.

II est à remarquer que la charge utile de communication multi-spots peut comporter plusieurs antennes de réception, à raison par exemple d'une antenne de réception par station d'accès.

Dans le cas où la station de télécommandes et télémesures est déportée sur un site différent de celui de la station d'accès satellitaire GWt et plus généralement, la station de télécommandes et télémesures peut être reliée à ladite station d'accès satellitaire GWt par une ou plusieurs liaisons de communication avec ou sans l'utilisation d'une infrastructure terrestre.

## Revendications

1. Procédé de suppression de signaux interférents montants, générés entre des stations d'accès satellitaire, géographiquement voisines et faisant partie d'un système spatial de communication multi-spots,
le système spatial de communication multi-spots (2) comportant
- un satellite de télécommunication (4) incluant une charge utile (6) embarquée de communication multi-spots ; et
- un premier ensemble d'un nombre entier N, supérieur ou égal à 2, de stations d'accès satellitaire GWi géographiquement voisines, i étant un premier indice entier variant de 1 à N ; et
- un deuxième ensemble (12) de terminaux utilisateurs (14, 16, 18) ;
la charge utile de communication multi-spots (6) ayant une antenne de réception satellite (22), une antenne d'émission satellite (24), et N voies répéteur VRi, i variant de 1 à N,
l'antenne de réception satellite (22) étant configurée pour recevoir en voie montante dans une bande de fréquence de réception, en même temps et en parallèle depuis N spots voisins de réception SPRi, i variant de 1 à N, N signaux radioélectriques de réception SRi différents, émis respectivement par les stations d'accès satellitaires GWi, chaque station d'accès satellitaire GWi, i variant de 1 à N, étant située dans un unique spot de réception SPRi correspondant, et chaque signal radioélectrique reçu SRi, i variant de 1 à N, étant délivré par une source de réception unique SRRi correspondante au spot réception SPRi et faisant partie de l'antenne de réception ; l'antenne d'émission satellite (24) étant configurée pour émettre en voie descendante dans une bande de fréquence d'émission, en même temps et en parallèle vers N spots voisins d'émission SPEi, i variant de 1 à N, N signaux radioélectriques d'émission SEi différents, fournis respectivement à N sources d'émission SREi correspondante aux spots émission SPEi et faisant partie de l'antenne émission, chaque spot d'émission SPEi, i variant de 1 à N, recouvrant la station d'accès satellitaire GWi correspondante, ayant une couverture sensiblement identique à celle du spot de réception SPRi, et les N signaux radioélectriques d'émissions SEi étant respectivement les signaux radioélectriques reçus SRi, amplifiés et transposés, de préférence abaissés, uniformément en fréquence ;
chaque voie répéteur VRi, i variant de 1 à N, étant comprise nominalement entre la source réception SRRi et la source émission SREi de même valeur d'indice i et comportant en aval de la source réception SRRi un amplificateur en réception LNAi et un diviseur RF DIVi à une entrée et N sorties, et un convertisseur de transposition, de préférence abaisseur, de fréquences DWNi connecté à une sortie du diviseur RF DIVi,
les terminaux utilisateurs du deuxième ensemble étant répartis sur les N spots d'émission SPEi, i variant de 1 à N ;
le procédé de suppression de signaux d'interférence générés entre stations d'accès satellitaire, étant **caractérisé en ce qu'**il comprend :
- dans une première phase (332 ; 422) avant lancement du satellite, une première étape (304 ; 404), dans laquelle pour un entier i0 prédéterminé et fixé, pris parmi les entiers compris entre 1 et N, on implante de manière permanente dans la voie répéteur VRi0 une matrice d'opposition MATi0 à N lignes d'entrées Li0, k, k variant de 1 à N, et une unique borne de sortie, la ligne d'entrée Li0, i0 étant une ligne d'entrée directe, connectée directement à une sortie du diviseur DIVi0, la ou les N-1 lignes d'entrée(s) restante(s) Li0, j, j étant un indice variant de 1 à N et différant de i0, étant des lignes dérivées d'opposition de la matrice d'opposition MATi0, connectée(s) respectivement au(x) diviseur(s) DIVj correspondant(s) en une de leurs sorties, et l'unique borne de sortie de la matrice d'opposition MATi0 étant connectée à la borne d'entrée du convertisseur de transposition de fréquences DWNi0, la matrice d'opposition MATi0 comportant les lignes d'entrées Li0, i et un combineur COMi0 à N entrées/une sortie, alimenté en entrée par les lignes d'entrée Li0, k, k variant de 1 à N, et connecté en sortie à la borne de sortie de la matrice d'opposition, et chaque ligne d'entrée, dérivée d'opposition, Li0, j, j variant de 1 à N et différant de i0, incluant un atténuateur et déphaseur différent contrôlable par télécommande ; puis
- dans une deuxième phase (334 ; 424) après le lancement du satellite et la mise en service des stations d'accès satellitaire,
- une deuxième étape (306 ; 406) dans laquelle une source d'émission SREt, t étant un entier prédéterminé, compris entre 1 et N, correspondante au spot d'émission satellite SPEt, recouvrant la station d'accès satellitaire GWt qui comporte un dispositif de surveillance du spectre de communication, est sélectionnée, et dans laquelle la borne de sortie de la matrice d'opposition MATi0 est connectée à la source d'émission SREt sélectionnée et les sources d'émission restantes SREs, s étant un indice variant de 1 à N et différent de t, sont déconnectées de leur voies répéteurs VRs associées, en configurant de manière idoine des commutateurs d'un anneau de sélection de sortie (134), connecté entre des bornes de sortie des voies répéteur VRi et les sources émission SREi de l'antenne émission, i variant de 1 à N ; puis
- une troisième étape (308 ; 408) dans laquelle la source de réception SRRi0, correspondante du spot de réception SPRi0 recouvrant la station d'accès satellitaire GWi0, est connectée à la ligne directe d'entrée de la matrice d'opposition MATi0, et les sources de réception SRRj, j variant de 1 à N et différent de i0, sont déconnectées des N-1 lignes d'entrée dérivées d'opposition Li0, j de la matrice d'opposition MATi0 au moyen de commutateurs d'un ensemble de commutation d'entrée (32 ; 132), ensuite
- une quatrième étape (310 ; 410) dans laquelle la station d'accès satellitaire GWt, de rang t, reçoit un multiplex de signaux de test émis par les stations d'accès satellitaire GWk, k variant de 1 à N, du premier ensemble, et reçus par la source de réception SRRI0 et retransmis par la source d'émission SREt, et numérise ledit multiplex en un signal utile d'acquisition ACQi0, i0 à l'aide d'un moniteur du spectre de communication CSM; puis
- une cinquième étape (312 ; 412) dans laquelle, pour chaque source de réception restante SRRj, j variant de 1 à N et différent de i0,
** la source de réception SRRj restante, correspondante au spot de réception SPRj recouvrant la station d'accès satellitaire GWj, est connectée à la ligne dérivée d'opposition Li0, j de la matrice d'opposition MATi0, et les sources de réception SRRk, k variant de 1 à N et différent de j, sont déconnectées des N-1 lignes d'entrée correspondantes Li0, k de la matrice d'opposition MATi0 au moyen des commutateurs d'un ensemble de commutation d'entrée (32 ; 132),; puis
** la station d'accès satellitaire GWt reçoit un multiplex de signaux de test émis par les stations d'accès satellitaire GWk, k variant de 1 à N, reçus par la source de réception SRRj et retransmis par la source d'émission SREt, et numérise ledit multiplex en un signal interférent d'acquisition ACQi0, j ; ensuite
- une sixième étape (314 ; 414), dans laquelle la station d'accès satellitaire GWt fait calculer par un calculateur de surveillance spectrale des signaux de communication reçus, pour chaque signal interférent d'acquisition ACQi0, j, j variant de 1 à N et différent de i0, un coefficient complexe Ci0, j de corrélation entre le signal utile d'acquisition ACQi0, i0 et le signal interférent d'acquisition ACQi0, j, et déterminer à partir du coefficient complexe Ci0, j des valeurs d'atténuation et de déphasage de la ligne d'opposition Li0, j permettant de rejeter le signal interférent généré par GWj sur l'accès en réception répéteur attribué à la station d'accès satellitaire GWi0 ; puis
- une septième étape (316 ;416), dans laquelle les atténuateurs et déphaseurs de la matrice d'opposition MATi0 sont réglés par télécommande sur les valeurs d'atténuation et de déphasage déterminées dans la sixième étape (314 ; 414).

2. Procédé de suppression de signaux d'interférence générés entre stations d'accès satellitaire selon la revendication 1, dans lequel
- pendant la première phase (332 ; 422), la première étape (304 ; 404) avant lancement du satellite consiste à :
pour i variant de 1 à N, implanter de manière permanente dans voie répéteur VRi, une matrice d'opposition MATi à N lignes d'entrées Li, k, k variant de 1 à N, et une unique borne de sortie, la ligne d'entrée Li, i étant une ligne d'entrée directe, connectée directement à une sortie du diviseur DIVi, la ou les N-1 lignes d'entrée(s) restante(s) Li, j, j étant un deuxième indice variant de 1 à N et différant de i, étant des lignes dérivées d'opposition de la matrice d'opposition MATi, connectée(s) respectivement au(x) diviseur(s) DIVj correspondant(s) en une de leurs sorties, et l'unique borne de sortie de la matrice d'opposition MATi étant connectée à la borne d'entrée du convertisseur de transposition de fréquences DWNi, la matrice d'opposition MATi comportant les lignes d'entrées Li, k et un combineur COMi à N entrées/une sortie, alimenté en entrée par les lignes d'entrée Li, k, k variant de 1 à N, et connectée en sortie à la borne de sortie de la matrice d'opposition MATi, et chaque ligne d'entrée, dérivée d'opposition, Li, j, j variant de 1 à N et différant de i, incluant un atténuateur et déphaseur différent contrôlable par télécommande ; puis
- pendant la deuxième phase (334 ; 424) après lancement du satellite (4) et de mise en service des stations d'accès satellitaire, pour i variant de 1 à N,
- la deuxième étape (306 ; 406) consiste à sélectionner la source d'émission SREt, t étant un entier prédéterminé, compris entre 1 et N, correspondante au spot d'émission satellite SPEt, recouvrant la station d'accès satellitaire GWt qui comporte un dispositif de surveillance du spectre de communication, et à connecter la borne de sortie de la matrice d'opposition MATi à la source d'émission SREt sélectionnée et à déconnecter les sources d'émission restantes SREs, s étant un indice variant de 1 à N et différant de t, de leurs voies répéteurs VRs associées, en configurant de manière idoine les commutateurs de l'anneau de sélection de sortie (134), connecté entre les bornes de sortie des voies répéteur VRi et les sources d'émission SREi de l'antenne émission (24) ;
- la troisième étape (308 ; 408) consiste à connecter la source de réception SRRi, correspondante du spot de réception SPRi recouvrant la station d'accès satellitaire GWi, à la ligne directe d'entrée de la matrice d'opposition MATi, et à déconnecter les sources de réception SRRj, j variant de 1 à N et différent de i, des N-1 lignes d'entrée dérivées d'opposition Li,j de la matrice d'opposition MATi ;
- la quatrième étape (310 ; 410) consiste en ce que la station d'accès satellitaire GWt, de rang t, reçoit un multiplex de signaux de test émis par les stations d'accès satellitaire GWk, k variant de 1 à N, du premier ensemble, et reçus par la source de réception SRRi et retransmis par la source d'émission SREt, et numérise ledit multiplex en un signal utile d'acquisition ACQi, i ; puis
- la cinquième étape (312 ; 412) consiste à, pour chaque source de réception restante SRRj, j variant de 1 à N et différent de i,
** connecter la source de réception SRRj restante, correspondante au spot de réception SPRj recouvrant la station d'accès satellitaire GWj, à la ligne dérivée d'opposition Li, j de la matrice d'opposition MATi, et à déconnecter les sources de réception SRRk, k variant de 1 à N et différent de j, des N-1 lignes d'entrée correspondantes Li, k de la matrice d'opposition MATi ; puis
** en ce que la station d'accès satellitaire GWt reçoit un multiplex de signaux de test émis par les stations d'accès satellitaire GWk, k variant de 1 à N, reçus par la source de réception SRRi et retransmis par la source d'émission SREt, et numérise ledit multiplex en un signal interférent d'acquisition ACQi, j ;
- la sixième étape (314 ;414) consiste en ce que la station d'accès satellitaire GWt fait calculer par son calculateur de surveillance spectrale des signaux de communication, pour chaque signal interférent d'acquisition ACQi, j, j variant de 1 à N et différent de i, un coefficient complexe Ci, j de corrélation entre le signal utile d'acquisition ACQi, i et le signal interférent d'acquisition ACQi, j, et déterminer à partir du coefficient complexe Ci, j des valeurs d'atténuation et de déphasage de la ligne d'opposition Li, j permettant de rejeter le signal interférent généré par la station d'accès satellitaire GWj sur l'accès en réception répéteur attribué à la station d'accès satellitaire GWi ;
- la septième étape (316 ; 416) consiste en ce que les atténuateurs et déphaseurs de la matrice d'opposition MATi sont réglés par télécommande sur les valeurs d'atténuation et de déphasage déterminées dans la sixième étape (314 ; 414).

3. Procédé de suppression de signaux d'interférence générés entre stations d'accès satellitaire selon l'une des revendications 1 à 2, dans lequel le nombre N de stations d'accès satellitaire voisines est égal à 2 ou 3.

4. Procédé de suppression de signaux d'interférence générés entre stations d'accès satellitaire selon l'une des revendications 1 à 3, dans lequel les positions des commutateurs d'unensemble de commutation d'entrée, les positions des commutateurs de l'anneau de commutation de sorties, et les réglages des atténuateurs et des déphaseurs des lignes dérivées d'opposition sont exécutés à partir de l'envoi de télécommandes envoyés par une station de télécommandes et télémesure, intégrée sur le même site que celui de la station d'accès satellitaire GWt, ou déportée sur un site différent de celui de la station d'accès satellitaire GWt et reliée à ladite station d'accès satellitaire GWt par une infrastructure terrestre.

5. Procédé de suppression de signaux d'interférence générés entre stations d'accès satellitaire selon l'une des revendications 1 à 4, dans lequel La forme d'onde des signaux de test émis par les stations d'accès satellitaire est soit un bruit blanc large bande, soit un peigne de raies, soit des signaux de communication représentatifs du service.

6. Procédé de suppression de signaux d'interférents générés entre stations d'accès satellitaire selon l'une des revendications 1 à 5, comprenant une troisième phase (336 ; 426) de mise en oeuvre du service de communication et une huitième étape (308 ; 408) dans laquelle
pour i variant de 1 à N, chaque source de réception SRi de l'antenne de réception multi-spots est connectée à la source d'émission SEi correspondante de l'antenne d'émission au travers de la voie répéteur associé VRi, en positionnant les commutateurs de l'ensemble de commutation d'entrée et les commutateurs de l'anneau de sortie, de sorte à obtenir cette configuration d'interconnexion des sources entre elles,
la matrice d'opposition MATi0 ou les matrices d'opposition MATi ayant été réglée(s) dans la première phase (332 ; 422) et la deuxième phase (334 ; 424) de sorte à supprimer les interférences créées par les stations d'accès satellitaire GWj voisines de la station d'accès satellitaire GWi0.

7. Système spatial de communication multi-spots pour supprimer les signaux interférents montants, générés entre stations d'accès satellitaire, géographiquement voisines, et comprenant
- un satellite de télécommunication (4) incluant une charge utile (6) embarquée de communication multi-spots ; et
- un premier ensemble d'un nombre entier N, supérieur ou égal à 2, de stations d'accès satellitaire GWi, i étant un premier indice entier variant de 1 à N, géographiquement voisines pour créer des interférences entre elles sur au moins un accès satellite ; et
- un deuxième ensemble (12) de terminaux utilisateurs (14, 16, 18) ;
la charge utile de communication multi-spots (6 ) ayant une ou plusieurs antenne(s) de réception satellite (22), une antenne d'émission satellite (24), et N voies répéteur VRi, i variant de 1 à N,
la ou les antenne(s) de réception satellite (22) étant configurée pour recevoir en voie montante dans une bande de fréquence de réception, en même temps et en parallèle depuis N spots voisins de réception SPRi, i variant de 1 à N, N signaux radioélectriques de réception SRi différents, émis respectivement par les stations d'accès satellitaires GWi, chaque station d'accès satellitaire GWi, i variant de 1 à N, étant située dans un unique spot de réception SPRi correspondant, et chaque signal radioélectrique SRi, i variant de 1 à N, étant délivré par une source unique SRRi correspondante au spot réception SPRi de l'antenne de réception ;
l'antenne d'émission satellite (24) étant configurée pour émettre en voie descendante dans une bande de fréquence d'émission, en même temps et en parallèle vers N spots voisins d'émission SPEi, i variant de 1 à N, les N signaux radioélectriques reçus, amplifiés et transposés uniformément en fréquence, Sid, chaque spot d'émission SPEi, i variant de 1 à N, recouvrant la station d'accès satellitaire GWi correspondante, ayant une couverture sensiblement identique à celle du spot de réception SPRi ;
chaque voie répéteur VRi, i variant de 1 à N, étant comprise nominalement entre la source réception SRRi et la source émission SREi de même valeur d'indice i et comportant en aval de la source réception SRRi un amplificateur en réception LNAi et un diviseur RF DIVi à une entrée et N sorties, et un convertisseur abaisseur de transposition, de préférence abaisseur, de fréquences DWNi connecté à une sortie du diviseur RF DIVi,
les terminaux utilisateurs du deuxième ensemble étant répartis sur les N spots d'émission SPEi, i variant de 1 à N ;
le système spatial de communication multi-spots étant **caractérisé en ce que** :
- une station d'accès satellitaire GWt, t étant un entier prédéterminé, compris entre 1 et N, correspondante au spot d'émission satellite SPEt, qui la recouvre, comporte un dispositif de surveillance du spectre de communication CSM ; et
- la charge utile (6) comporte des commutateurs d'un ensemble de commutation d'entrée (32 ; 132), connecté entre des bornes d'entrée de voies répéteur et les sources réception de l'antenne réception, et des commutateurs d'un anneau de sélection de sortie (34 ; 134), connecté entre des bornes de sortie des voies répéteur VRi et les sources émission SREi de l'antenne émission pour sélectivement connecter les sources de réception SRRj, une après l'autre, pendant une étape de test/calibration et connecter toutes les sources SRRj pendant un service opérationnel de communication, en configurant de manière idoine les commutateurs de l'anneau de sélection de sortie; et
- la charge utile (6) comprend au moins une matrice d'opposition MATi0, i0 étant un entier prédéterminé et fixé, compris entre 1 et N, à N lignes d'entrées Li0, k, k variant de 1 à N, et une unique borne de sortie, la ligne d'entrée Li0, i0 étant une ligne d'entrée directe, connectée directement à une sortie du diviseur DIVi0, la ou les N-1 lignes d'entrée(s) restante(s) Li0, j, j étant un indice variant de 1 à N et différant de i0, étant des lignes dérivées d'opposition de la matrice d'opposition MATi0, connectée(s) respectivement au(x) diviseur(s) DIVj correspondant(s) en une de leurs sorties, et l'unique borne de sortie de la matrice d'opposition MATi0 étant connectée à la borne d'entrée du convertisseur de transposition de fréquences DWNi0, la matrice d'opposition MATi0 comportant les lignes d'entrées Li0, i et un combineur COMi0 à N entrées/une sortie, alimenté en entrée par les lignes d'entrée Li0, k, k variant de 1 à N, et connecté en sortie à la borne de sortie de la matrice d'opposition, et chaque ligne d'entrée, dérivée d'opposition, Li0, j, j variant de 1 à N et différant de i0, incluant un atténuateur et déphaseur différent contrôlable par télécommande sur des valeurs d'atténuation et de déphasage déterminées par la station d'accès satellitaire GWt.

8. Système spatial de communication multi-spots pour supprimer les signaux interférents montants selon la revendication 7, dans lequel
- la charge utile (6) est configurée pour, dans une deuxième phase postérieure au lancement du satellite et à la mise en service des stations d'accès satellitaire:
** dans une deuxième étape, sélectionner la source d'émission SREt, correspondante au spot d'émission satellite SPEt, connecter la borne de sortie de la matrice d'opposition MATi0 à la source d'émission SREt sélectionnée et déconnecter les sources d'émission restantes SREs, s étant un indice variant de 1 à N et différant de t, en configurant de manière idoine les commutateurs de l'anneau de sélection de sortie (34 ; 134) ;
** dans une troisième étape, connecter la source de réception SRRi0, correspondante du spot de réception SRi0, à la ligne directe d'entrée de la matrice d'opposition MATi0, et déconnecter les sources de réception SRRj, j variant de 1 à N et différent de i0, des N-1 lignes d'entrée dérivées d'opposition Li0, j de la matrice d'opposition MATi0 ;
- la station d'accès satellitaire GWt, de rang t est configurée pour, dans une quatrième étape, recevoir un multiplex de signaux de test, émis par les stations d'accès satellitaire GWk, k variant de 1 à N, du premier ensemble, reçus par la source de réception SRRI0 puis retransmis par la source d'émission SREt, et numériser ledit multiplex en un signal utile d'acquisition ACQi0, i0 ;
- la charge utile (6) est configurée pour, dans une cinquième étape, connecter chaque source de réception restante SRRj, j variant de 1 à N et différent de i0, correspondante au spot de réception SRj recouvrant la station d'accès satellitaire GWj, à la ligne dérivée d'opposition Li0, j de la matrice d'opposition MATi0, et déconnecter les sources de réception SRRk, k variant de 1 à N et différent de j, des N-1 lignes d'entrée correspondantes Li0, k de la matrice d'opposition MATi0 ; et
- la station d'accès satellitaire GWt est configurée pour ensuite, dans la même cinquième étape, recevoir un multiplex de signaux de test émis par les stations d'accès satellitaire GWk, k variant de 1 à N, reçus par la source de réception SRRi0 et retransmis par la source d'émission SREt, et numériser ledit multiplex en un signal interférent d'acquisition ACQi0, j, et dans une sixième étape faire calculer par le calculateur de surveillance spectrale des signaux de communication reçus, pour chaque signal interférent d'acquisition ACQi0, j, j variant de 1 à N et différent de i0, un coefficient complexe Ci0, j de corrélation entre le signal utile d'acquisition ACQi0, i0 et le signal interférent d'acquisition ACQi0, j, et déterminer à partir du coefficient complexe Ci0, j des valeurs d'atténuation et de déphasage de la ligne d'opposition Li0, j permettant de rejeter le signal interférent généré par GWj sur l'accès en réception répéteur attribué à la station d'accès satellitaire GWi0 ;
- la charge utile (6) est configurée pour, dans une septième étape, régler les atténuateurs et déphaseurs de la matrice d'opposition MATi0 par télécommande sur les valeurs d'atténuation et de déphasage déterminées dans la sixième étape.

9. Système spatial de communication multi-spots selon l'une des revendications 7 à 8, dans lequel
la charge utile (6) comporte N matrices d'opposition MATi, i variant de 1 à N, à N lignes d'entrées Li, k, k variant de 1 à N, et une unique borne de sortie, la ligne d'entrée Li, i étant une ligne d'entrée directe, connectée directement à une sortie du diviseur DIVi, la ou les N-1 lignes d'entrée(s) restante(s) Li, j, j étant un deuxième indice variant de 1 à N et différant de i, étant des lignes dérivées d'opposition de la matrice d'opposition MATi, connectées) respectivement aux diviseur(s) DIVj correspondants en une de leurs sorties, et l'unique borne de sortie de la matrice d'opposition MATi étant connectée à la borne d'entrée du convertisseur de transposition de fréquences DWNi0, la matrice d'opposition MATi comportant les lignes d'entrées Li, k et un combineur COMi à N entrées/une sortie, alimenté en entrée par les lignes d'entrée Li, k, k variant de 1 à N, et connecté en sortie à la borne de sortie de la matrice d'opposition MATi, et chaque ligne d'entrée, dérivée d'opposition, Li,j, j variant de 1 à N et différant de i, incluant un atténuateur et déphaseur différent contrôlable par télécommande ; et
la charge utile (6) est configurée pour, après le lancement du satellite (4) et la mise en service des stations d'accès satellitaire, pour i variant de 1 à N,
dans la deuxième étape, sélectionner la source d'émission SREt, t étant un entier prédéterminé, compris entre 1 et N, correspondante au spot d'émission satellite Set, recouvrant la station d'accès satellitaire GWt qui comporte un dispositif de surveillance du spectre de communication, et à connecter la borne de sortie de la matrice d'opposition MATi à la source d'émission SREt sélectionnée et à déconnecter les sources d'émission restantes SEs, s étant un indice variant de 1 à N et différant de t, en configurant de manière idoine les commutateurs de l'anneau de commutation de sortie, connecté entre des bornes de sortie des voies répéteur et les sources émission de l'antenne émission ;
- dans la troisième étape, connecter la source de réception SRRi, correspondante du spot de réception SRi recouvrant la station d'accès satellitaire GWi, à la ligne directe d'entrée de la matrice d'opposition MATi, et à déconnecter les sources de réception SRRj, j variant de 1 à N et différent de i, des N-1 lignes d'entrée dérivées d'opposition Li, j de la matrice d'opposition MATi ;
- dans la cinquième étape, postérieure à la quatrième étape dans laquelle la station d'accès satellitaire GWt, de rang t, reçoit un multiplex de signaux de test émis par les stations d'accès satellitaire GWk, k variant de 1 à N, du premier ensemble, et reçus par la source de réception SRRi et retransmis par la source d'émission SEt, et numérise ledit multiplex en un signal utile d'acquisition ACQi, i,
pour chaque source de réception restante SRRj, j variant de 1 à N et différent de i, connecter la source de réception SRRj restante, correspondante au spot de réception SRj recouvrant la station d'accès satellitaire GWj, à la ligne dérivée d'opposition Li, j de la matrice d'opposition MATi, et déconnecter les sources de réception SRRk, k variant de 1 à N et différent de j, des N-1 lignes d'entrée correspondantes Li, k de la matrice d'opposition MATi.

10. Système spatial de communication multi-spots selon la revendication 9, dans lequel
la station d'accès satellitaire GWt est configurée pour :
- dans la cinquième étape recevoir un multiplex de signaux de test émis par les stations d'accès satellitaire GWk, k variant de 1 à N, reçus par la source de réception SRRi et retransmis par la source d'émission SEt, et numériser ledit multiplex en un signal interférent d'acquisition ACQi, j ; et
- dans la sixième étape faire calculer par son calculateur de surveillance spectrale des signaux de communication reçus, pour chaque signal interférent d'acquisition ACQi, j, j variant de 1 à N et différent de i, un coefficient complexe Ci, j de corrélation entre le signal utile d'acquisition ACQi, i et le signal interférent d'acquisition ACQi, j, et déterminer à partir du coefficient complexe Ci, j des valeurs d'atténuation et de déphasage de la ligne d'opposition Li, j permettant de rejeter le signal interférent généré par la station d'accès satellitaire GWj sur l'accès en réception répéteur attribué à la station d'accès satellitaire GWi ; et
la charge utile (6) est configurée pour que, dans la septième étape, les atténuateurs et déphaseurs de la matrice d'opposition MATi soient réglés par télécommande sur les valeurs d'atténuation et de déphasage déterminées dans la sixième étape.

11. Système spatial de communication multi-spots selon l'une des revendications 7 à 10, dans lequel
le nombre N de stations d'accès satellitaire voisines est supérieur ou égal à 2 et inférieur ou égal à 8.

12. Système spatial de communication multi-spots selon l'une des revendications 7 à 11, dans lequel
les positions des commutateurs de l'ensemble de commutation d'entrée, les positions des commutateurs de l'anneau de commutation de sorties, et les réglages des atténuateurs et des déphaseurs des lignes dérivées d'opposition sont exécutées à partir de l'envoi de télécommandes envoyées par une station de télécommandes et télémesure, intégrée sur le même site que celui de la station d'accès satellitaire GWt, ou déportée sur un site différent de celui de la station d'accès satellitaire GWt et reliée à ladite station d'accès satellitaire GWt par une ou plusieurs liaisons de communication avec ou sans l'utilisation d'une infrastructure terrestre.

## Patentansprüche

1. Verfahren zur Unterdrückung von Uplink-Interferenzsignalen, die zwischen geografisch benachbarten Satellitenzugangsstationen erzeugt werden und Teil eines Multispot-Weltraumkommunikationssystems sind,
wobei das Multispot-Weltraumkommunikationssystem (2) Folgendes aufweist:
- einen Telekommunikationssatelliten (4), der eine an Bord mitgeführte Multispot-Kommunikationsnutzlast (6) einschließt, und
- einen ersten Satz einer ganzen Zahl N, größer oder gleich 2, von geografisch benachbarten Satellitenzugangsstationen GWi, wobei i ein erster ganzzahliger Index ist, der von 1 bis N variiert; und
- einen zweiten Satz (12) von Benutzerendgeräten (14, 16, 18);
wobei die Multispot-Kommunikationsnutzlast (6) eine Satellitenempfangsantenne (22), eine Satellitensendeantenne (24) und N Repeaterkanäle VRi aufweist, wobei i von 1 bis N variiert,
wobei die Satellitenempfangsantenne (22) so konfiguriert ist, dass sie in einem Empfangsfrequenzband gleichzeitig und parallel von N benachbarten Empfangsspots SPRi, wobei i von 1 bis N variiert, N verschiedene Empfangsfunksignale SRi, die jeweils von den Satellitenzugangsstationen GWi gesendet werden, in einem Uplink-Kanal empfängt, wobei sich jede Satellitenzugangsstation GWi, wobei i von 1 bis N variiert, an einem entsprechenden einzigen Empfangs-Spot SPRi befindet, und jedes empfangene Funksignal SRi, wobei i von 1 bis N variiert, von einer einzigen Empfangsquelle SRRi geliefert wird, die dem Empfangs-Spot SPRi entspricht und Teil der Empfangsantenne ist,
wobei die Satelliten-Sendeantenne (24) so konfiguriert ist, dass sie in einem Sendefrequenzband gleichzeitig und parallel zu N benachbarten Sende-Spots SPEi, wobei i von 1 bis N variiert, N verschiedene Sende-Funksignale SEi in einem Downlink-Kanal sendet, die jeweils an N Sendequellen SREi bereitgestellt werden, die den Sende-Spots SPEi entsprechen und Teil der Sendeantenne sind, wobei jeder Sende-Spot SPEi, wobei i von 1 bis N variiert, die entsprechende Satellitenzugangsstation GWi überdeckt, der eine Abdeckung aufweist, die im Wesentlichen identisch mit derjenigen des Empfangs-Spots SPRi ist, und die N Sende-Funksignale SEi jeweils die empfangenen, verstärkten und transponierten, vorzugsweise abgesenkten, gleichmäßig frequenzumgesetzten Funksignale SRi sind,
wobei jeder Repeaterkanal VRi, wobei i von 1 bis N variiert, nominell zwischen der Empfangsquelle SRRi und der Sendequelle SREi mit demselben Indexwert i enthalten ist und im nachgelagerten Bereich der Empfangsquelle SRRi einen Empfangsverstärker LNAi und einen HF-Teiler DIVi mit einem Eingang und N Ausgängen sowie einen mit einem Ausgang des HF-Teilers DIVi verbundenen, vorzugsweise absenkenden, Frequenzumsetzer DWNi aufweist,
wobei die Benutzerendgeräte des zweiten Satzes auf die N Sende-Spots SPEi verteilt sind, wobei i von 1 bis N variiert,
wobei das Verfahren zur Unterdrückung von Interferenzsignalen, die zwischen Satellitenzugangsstationen erzeugt werden, **dadurch gekennzeichnet ist, dass** es Folgendes umfasst:
- in einer ersten Phase (332; 422) vor dem Start des Satelliten einen ersten Schritt (304; 404), in dem für eine vorbestimmte und festgelegte Ganzzahl i0, die unter den ganzen Zahlen zwischen 1 und N ausgewählt wird, eine Oppositionsmatrix MATi0 mit N Eingangszeilen Li0, k, wobei k von 1 bis N variiert, und einem einzigen Ausgangsanschluss dauerhaft in den Repeaterkanal VRi0 installiert wird, wobei die Eingangszeile Li0, wobei i0 eine direkte Eingangszeile ist, die direkt mit einem Ausgang des Teilers DIVi0 verbunden ist, wobei die verbleibende(n) N-1 Eingangszeile(n) Li0, j, wobei j ein Index ist, der von 1 bis N variiert und sich von i0 unterscheidet, abgeleitete Oppositionszeilen der Oppositionsmatrix MATi0 sind, die jeweils mit dem/den entsprechenden Teiler(n) DIVj an einem ihrer Ausgänge verbunden sind, und wobei der einzige Ausgangsanschluss der Oppositionsmatrix MATi0 mit dem Eingangsanschluss des Frequenzumsetzers DWNi0 verbunden ist, wobei die Oppositionsmatrix MATi0 die Eingangszeilen Li0, i und einen Kombinator COMi0 mit N Eingängen/einem Ausgang aufweist, der an seinem Eingang von den Eingangszeilen Li0, k gespeist wird, wobei k von 1 bis N variiert, und an seinem Ausgang mit dem Ausgangsanschluss der Oppositionsmatrix verbunden ist, und wobei jede abgeleitete Oppositions-Eingangszeile, Li0, j, wobei j von 1 bis N variiert und sich von i0 unterscheidet, ein unterschiedliches Dämpfungs- und Phasenverschiebungsglied einschließt, das durch Fernsteuerung steuerbar ist, anschließend
- in einer zweiten Phase (334; 424) nach dem Start des Satelliten und der Inbetriebnahme der Satellitenzugangsstationen,
- einen zweiten Schritt (306; 406), in dem eine Sendequelle SREt, wobei t eine vorbestimmte Ganzzahl zwischen 1 und N ist, die dem Satelliten-Sendespot SPEt entspricht, der die Satellitenzugangsstation GWt überdeckt, die eine Vorrichtung zur Überwachung des Kommunikationsspektrums aufweist, ausgewählt wird, und in dem der Ausgangsanschluss der Oppositionsmatrix MATi0 mit der ausgewählten Sendequelle SREt verbunden wird und die verbleibenden Sendequellen SREs, wobei s ein Index ist, der von 1 bis N variiert und sich von t unterscheidet, von ihren zugeordneten Repeaterkanälen VRs getrennt werden, während Schalter eines Ausgangsauswahlrings (134), der zwischen Ausgangsanschlüssen der Repeaterkanäle VRi und den Sendequellen SREi, wobei i von 1 bis N variiert, der Sendeantenne angeschlossen ist, in geeigneter Weise konfiguriert werden, anschließend
- einen dritten Schritt (308; 408), in dem die entsprechende Empfangsquelle SRRi0 des Empfangs-Spots SPRi0, der die Satellitenzugangsstation GWi0 überdeckt, mit der direkten Eingangszeile der Oppositionsmatrix MATi0 verbunden wird, und die Empfangsquellen SRRj, wobei j von 1 bis N variiert und sich von i0 unterscheidet, von den N-1 abgeleiteten Oppositions-Eingangszeilen Li0, j der Oppositionsmatrix MATi0 mittels Schaltern einer Eingangsschaltanordnung (32; 132) getrennt werden, anschließend
- einen vierten Schritt (310; 410), in dem die Satellitenzugangsstation GWt, des Ranges t, einen Multiplex von Testsignalen empfängt, die von den Satellitenzugangsstationen GWk, wobei k von 1 bis N variiert, des ersten Satzes gesendet und von der Empfangsquelle SRRI0 empfangen und von der Sendequelle SREt weitergeleitet werden, und den Multiplex mit Hilfe eines Kommunikationsspektrum-Monitors CSM zu einem Nutz-Erfassungssignal ACQi0, i0 digitalisiert; anschließend
- einen fünften Schritt (312; 412), bei dem für jede verbleibende Empfangsquelle SRRj, wobei j von 1 bis N variiert und sich von i0 unterscheidet,
** die verbleibende Empfangsquelle SRRj, die dem Empfangs-Spot SPRj entspricht, der die Satellitenzugangsstation GWj überdeckt, mit der abgeleiteten Oppositionszeile Li0, j der Oppositionsmatrix MATi0 verbunden wird, und die Empfangsquellen SRRk, wobei k von 1 bis N variiert und sich von j unterscheidet, von den N-1 entsprechenden Eingangszeilen Li0, k der Oppositionsmatrix MATi0 mittels der Schalter einer Eingangsschaltanordnung (32; 132) getrennt werden, anschließend
** die Satellitenzugangsstation GWt einen Multiplex von Testsignalen empfängt, die von den Satellitenzugangsstationen GWk gesendet werden, wobei k von 1 bis N variiert, die von der Empfangsquelle SRRj empfangen und von der Sendequelle SREt weitergeleitet werden, und den Multiplex zu einem interferierenden Erfassungssignal ACQi0, j digitalisiert; anschließend
- einen sechsten Schritt (314; 414), in dem die Satellitenzugangsstation GWt einen Rechner zur spektralen Überwachung der empfangenen Kommunikationssignale veranlasst, für jedes interferierende Erfassungssignal ACQi0, j, wobei j von 1 bis N variiert und sich von i0 unterscheidet, einen komplexen Korrelationskoeffizienten Ci0, j zwischen dem Nutz-Erfassungssignal ACQi0, i0 und dem interferierenden Erfassungssignal ACQi0, j zu berechnen, und anhand des komplexen Koeffizienten Ci0, j Dämpfungs- und Phasenverschiebungswerte der Oppositionszeile Li0, j zu bestimmen, die es ermöglichen, das von GWj erzeugte interferierende Signal auf dem der Satellitenzugangsstation GWi0 zugewiesenen Repeater-Empfangszugang zu unterdrücken; anschließend
- einen siebten Schritt (316; 416), in dem die Dämpfungs- und Phasenverschiebungsglieder der Oppositionsmatrix MATi0 ferngesteuert auf die im sechsten Schritt (314; 414) bestimmten Dämpfungs- und Phasenverschiebungswerte eingestellt werden.

2. Verfahren zur Unterdrückung von Interferenzsignalen, die zwischen Satellitenzugangsstationen nach Anspruch 1 erzeugt werden, wobei
- während der ersten Phase (332; 422), der erste Schritt (304; 404) vor dem Start des Satelliten in Folgendem besteht:
für i, das von 1 bis N variiert, dauerhaftes Installieren einer Oppositionsmatrix MATi mit N Eingangszeilen Li, k, wobei k von 1 bis N variiert, und einem einzigen Ausgangsanschluss, in einem Repeaterkanal VRi, wobei die Eingangszeile Li, i eine direkte Eingangszeile ist, die direkt mit einem Ausgang des Teilers DIVi verbunden ist, wobei die verbleibende(n) N-1 Eingangszeile(n) Li, j, wobei j ein zweiter Index ist, der von 1 bis N variiert und sich von i unterscheidet, abgeleitete Oppositionszeilen der Oppositionsmatrix MATi sind, die jeweils mit dem/den entsprechenden Teiler(n) DIVj an einem ihrer Ausgänge verbunden sind, und der einzige Ausgangsanschluss der Oppositionsmatrix MATi mit dem Eingangsanschluss des Frequenzumsetzers DWNi verbunden ist, wobei die Oppositionsmatrix MATi die Eingangszeilen Li, k und einen Kombinator COMi mit N Eingängen/einem Ausgang aufweist, dessen Eingang von den Eingangszeilen Li, k gespeist wird, wobei k von 1 bis N variiert, und dessen Ausgang mit dem Ausgangsanschluss der Oppositionsmatrix MATi verbunden ist, und wobei jede abgeleitete Oppositions-Eingangszeile Li, j, wobei j von 1 bis N variiert und sich von i unterscheidet, ein unterschiedliches Dämpfungs- und Phasenverschiebungsglied einschließt, das durch Fernsteuerung steuerbar ist, anschließend
- während der zweiten Phase (334; 424) nach dem Start des Satelliten (4) und der Inbetriebnahme der Satellitenzugangsstationen, für i, das von 1 bis N variiert,
- der zweite Schritt (306; 406) darin besteht, die Sendequelle SREt auszuwählen, wobei t eine vorbestimmte Ganzzahl zwischen 1 und N ist, die dem Satelliten-Sendespot SPEt entspricht, der die Satellitenzugangsstation GWt überdeckt, die eine Vorrichtung zur Überwachung des Kommunikationsspektrums aufweist, und den Ausgangsanschluss der Oppositionsmatrix MATi mit der ausgewählten Sendequelle SREt zu verbinden, und die verbleibenden Sendequellen SREs, wobei s ein Index ist, der von 1 bis N variiert und sich von t unterscheidet, von ihren zugeordneten Repeaterkanälen VRs zu trennen, während die Schalter des Ausgangsauswahlrings (134), der zwischen den Ausgangsanschlüssen der Repeaterkanäle VRi und den Sendequellen SREi der Sendeantenne (24) angeschlossen ist, in geeigneter Weise konfiguriert werden,
- der dritte Schritt (308; 408) darin besteht, die Empfangsquelle SRRi, die dem Empfangs-Spot SPRi entspricht, der die Satellitenzugangsstation GWi überdeckt, mit der direkten Eingangszeile der Oppositionsmatrix MATi zu verbinden, und die Empfangsquellen SRRj, wobei j von 1 bis N variiert und sich von i unterscheidet, von den N-1 abgeleiteten Oppositions-Eingangszeilen Li, j der Oppositionsmatrix MATi zu trennen,
- der vierte Schritt (310; 410) darin besteht, dass die Satellitenzugangsstation GWt, des Ranges t, einen Multiplex von Testsignalen empfängt, die von den Satellitenzugangsstationen GWk, wobei k von 1 bis N variiert, des ersten Satzes gesendet werden, und von der Empfangsquelle SRRi empfangen und von der Sendequelle SREt weitergeleitet werden, und den Multiplex zu einem Nutz-Erfassungssignal ACQi, i digitalisiert; anschließend
- der fünfte Schritt (312; 412), für jede verbleibende Empfangsquelle SRRj, wobei j von 1 bis N variiert und sich von i unterscheidet, in Folgendem besteht:
** Verbinden der verbleibenden Empfangsquelle SRRj, die dem Empfangs-Spot SPRj entspricht, der die Satellitenzugangsstation GWj überdeckt, mit der abgeleiteten Oppositionszeile Li, j der Oppositionsmatrix MATi, und Trennen der Empfangsquellen SRRk, wobei k von 1 bis N variiert und sich von j unterscheidet, von den N-1 entsprechenden Eingangszeilen Li, k der Oppositionsmatrix MATi; anschließend
** in dem Empfangen, durch die Satellitenzugangsstation GWt, eines Multiplexes von Testsignalen, die von den Satellitenzugangsstationen GWk gesendet werden, wobei k von 1 bis N variiert, von der Empfangsquelle SRRi empfangen und von der Sendequelle SREt weitergeleitet werden, und Digitalisieren des Multiplexes in ein Interferenz-Erfassungssignal ACQi, j;
- der sechste Schritt (314; 414) darin besteht, dass die Satellitenzugangsstation GWt ihren Rechner zur spektralen Überwachung der Kommunikationssignale veranlasst, für jedes interferierende Erfassungssignal ACQi, j, wobei j von 1 bis N variiert und sich von i unterscheidet, einen komplexen Korrelationskoeffizienten Ci, j zwischen dem Nutz-Erfassungssignal ACQi, i und dem interferierenden Erfassungssignal ACQi, j zu berechnen, und anhand des komplexen Koeffizienten Ci, j Dämpfungs- und Phasenverschiebungswerte der Oppositionszeile Li, j zu bestimmen, die es ermöglichen, das von der Satellitenzugangsstation GWj erzeugte interferierende Signal auf dem der Satellitenzugangsstation GWi zugewiesenen Repeater-Empfangszugang zu unterdrücken;
- der siebte Schritt (316; 416) darin besteht, dass die Dämpfungs- und Phasenverschiebungsglieder der Oppositionsmatrix MATi per Fernsteuerung auf die im sechsten Schritt (314; 414) bestimmten Dämpfungs- und Phasenverschiebungswerte eingestellt werden.

3. Verfahren zur Unterdrückung von Interferenzsignalen, die zwischen Satellitenzugangsstationen nach einem der Ansprüche 1 bis 2 erzeugt werden, wobei
die Anzahl N von benachbarten Satellitenzugangsstationen gleich 2 oder 3 ist.

4. Verfahren zur Unterdrückung von Interferenzsignalen, die zwischen Satellitenzugangsstationen nach einem der Ansprüche 1 bis 3 erzeugt werden, wobei
die Positionen der Schalter einer Eingangsschaltanordnung, die Positionen der Schalter des Ausgangsschaltrings und die Einstellungen der Dämpfungs- und Phasenverschiebungsglieder der abgeleiteten Oppositionszeilen anhand der Sendung von Fernsteuerbefehlen ausgeführt werden, die von einer Fernsteuerungs- und Fernmessstation gesendet werden, die am selben Standort wie der der Satellitenzugangsstation GWt integriert ist, oder an einen anderen Standort als der der Satellitenzugangsstation GWt ausgelagert ist und mit der Satellitenzugangsstation GWt über eine Bodeninfrastruktur verbunden ist.

5. Verfahren zur Unterdrückung von Interferenzsignalen, die zwischen Satellitenzugangsstationen nach einem der Ansprüche 1 bis 4 erzeugt werden, wobei
die Wellenform der von den Satellitenzugangsstationen gesendeten Testsignale entweder ein breitbandiges weißes Rauschen, ein Streifenkamm oder für den Dienst repräsentative Kommunikationssignale ist.

6. Verfahren zur Unterdrückung von zwischen Satellitenzugangsstationen erzeugten Interferenzsignalen nach einem der Ansprüche 1 bis 5, umfassend eine dritte Phase (336; 426) der Implementierung des Kommunikationsdienstes und einen achten Schritt (308; 408), in dem
für i, das von 1 bis N variiert, jede Empfangsquelle SRi der Multispot-Empfangsantenne mit der entsprechenden Sendequelle SEi der Sendeantenne über den zugeordneten Repeaterkanal VRi verbunden wird, während die Schalter der Eingangsschaltanordnung und die Schalter des Ausgangsrings so positioniert werden, dass diese Konfiguration der Verbindung der Quellen untereinander erzielt wird,
wobei die Oppositionsmatrix MATi0 oder die Oppositionsmatrizen MATi in der ersten Phase (332; 422) und der zweiten Phase (334; 424) so eingestellt worden ist(sind), dass die von den Satellitenzugangsstationen GWj, die der Satellitenzugangsstation Gwi0 benachbart sind, erzeugten Interferenzen unterdrückt werden.

7. Multispot-Weltraumkommunikationssystem zur Unterdrückung von Uplink-Interferenzsignalen, die zwischen geografisch benachbarten Satellitenzugangsstationen erzeugt werden, und Folgendes umfassend:
- einen Telekommunikationssatelliten (4), der eine an Bord mitgeführte Multispot-Kommunikationsnutzlast (6) einschließt, und
- einen ersten Satz einer ganzen Zahl N, größer oder gleich 2, von Satellitenzugangsstationen GWi, wobei i ein erster ganzzahliger Index ist, der von 1 bis N variiert, die geografisch benachbart sind, um Interferenzen zwischen ihnen auf mindestens einem Satellitenzugang zu erzeugen; und
- einen zweiten Satz (12) von Benutzerendgeräten (14, 16, 18);
wobei die Multispot-Kommunikationsnutzlast (6) eine oder mehrere Satellitenempfangsantennen (22), eine Satellitensendeantenne (24) und N Repeaterkanäle VRi aufweist, wobei i von 1 bis N variiert,
wobei die Satellitenempfangsantenne(n) (22) so konfiguriert ist/sind, dass sie in einem Empfangsfrequenzband gleichzeitig und parallel von N benachbarten Empfangsspots SPRi, wobei i von 1 bis N variiert, N verschiedene Empfangsfunksignale SRi, die jeweils von den Satellitenzugangsstationen GWi gesendet werden, in einem Uplink-Kanal empfängt/empfangen, wobei sich jede Satellitenzugangsstation GWi, wobei i von 1 bis N variiert, an einem entsprechenden einzigen Empfangs-Spot SPRi befindet, und jedes Funksignal SRi, wobei i von 1 bis N variiert, von einer einzigen Quelle SRRi geliefert wird, die dem Empfangs-Spot SPRi der Empfangsantenne entspricht;
wobei die Satelliten-Sendeantenne (24) konfiguriert ist, um in einem Sendefrequenzband gleichzeitig und parallel zu N benachbarten Sende-Spots SPEi, wobei i von 1 bis N variiert, die N empfangenen, verstärkten und gleichmäßig frequenzumgesetzten Funksignale, Sid, in einem Downlink-Kanal zu senden, wobei jeder Sende-Spot SPEi, wobei i von 1 bis N variiert, der die entsprechende Satellitenzugangsstation GWi überdeckt, eine Abdeckung aufweist, die im Wesentlichen identisch mit derjenigen des Empfangs-Spots SPRi ist,
wobei jeder Repeaterkanal VRi, wobei i von 1 bis N variiert, nominell zwischen der Empfangsquelle SRRi und der Sendequelle SREi mit demselben Indexwert i enthalten ist und im nachgelagerten Bereich der Empfangsquelle SRRi einen Empfangsverstärker LNAi und einen HF-Teiler DIVi mit einem Eingang und N Ausgängen sowie einen, vorzugsweise absenkenden, Frequenzumsetzer DWNi, aufweist, der mit einem Ausgang des HF-Teilers DIVi verbunden ist,
wobei die Benutzerendgeräte des zweiten Satzes auf die N Sende-Spots SPEi verteilt sind, wobei i von 1 bis N variiert,
wobei das Multispot-Weltraumkommunikationssystem **dadurch gekennzeichnet ist, dass**:
- eine Satellitenzugangsstation GWt, wobei t eine vorbestimmte Ganzzahl zwischen 1 und N ist, die dem Satellitensendespot SPEt entspricht, der sie überdeckt, eine Vorrichtung zur Überwachung des Kommunikationsspektrums CSM aufweist, und
- die Nutzlast (6) Schalter einer Eingangsschaltanordnung (32; 132) aufweist, die zwischen Eingangsanschlüssen von Repeaterkanälen und den Empfangsquellen der Empfangsantenne geschaltet ist, und Schalter eines Ausgangsauswahlrings (34; 134), der zwischen Ausgangsanschlüsse der Repeaterkanäle VRi und die Sendequellen SREi der Sendeantenne angeschlossen ist, um die Empfangsquellen SRRj während eines Test-/Kalibrierungsschritts selektiv eine nach der anderen zu verbinden und alle Quellen SRRj während eines operativen Kommunikationsdienstes zu verbinden, während die Schalter des Ausgangsauswahlrings in geeigneter Weise konfiguriert werden, und
- die Nutzlast (6) mindestens eine Oppositionsmatrix MATi0 umfasst, wobei i0 eine vorbestimmte und festgelegte Ganzzahl zwischen 1 und N ist, mit N Eingangszeilen Li0, k, wobei k von 1 bis N variiert, und einen einzigen Ausgangsanschluss umfasst, wobei die Eingangszeile Li0, i0 eine direkte Eingangszeile ist, die direkt mit einem Ausgang des Teilers DIVi0 verbunden ist, wobei die verbleibende(n) N-1 Eingangszeile(n) Li0, j, wobei j ein Index ist, der von 1 bis N variiert und sich von i0 unterscheidet, abgeleitete Oppositionszeilen der Oppositionsmatrix MATi0 sind, die jeweils mit dem/den entsprechenden Teiler(n) DIVj an einem ihrer Ausgänge verbunden ist/sind, und der einzige Ausgangsanschluss der Oppositionsmatrix MATi0 mit dem Eingangsanschluss des Frequenzumsetzers DWNi0 verbunden ist, wobei die Oppositionsmatrix MATi0 die Eingangszeilen Li0, i und einen Kombinator COMi0 mit N Eingängen/einem Ausgang aufweist, der an seinem Eingang von den Eingangszeilen Li0, k gespeist wird, wobei k von 1 bis N variiert, und an seinem Ausgang mit dem Ausgangsanschluss der Oppositionsmatrix verbunden ist, und wobei jede abgeleitete Oppositions-Eingangszeile,, Li0, j, wobei j von 1 bis N variiert und sich von i0 unterscheidet, ein unterschiedliches Dämpfungs- und Phasenverschiebungsglied einschließt, das durch Fernsteuerung auf Dämpfungs- und Phasenverschiebungswerte steuerbar ist, die von der Satellitenzugangsstation GWt bestimmt werden.

8. Multispot-Weltraumkommunikationssystem zur Unterdrückung von Uplink-Interferenzsignalen nach Anspruch 7, wobei
- die Nutzlast (6) in einer zweiten Phase nach dem Start des Satelliten und der Inbetriebnahme der Satellitenzugangsstationen zu Folgendem konfiguriert ist:
** in einem zweiten Schritt, Auswählen der Sendequelle SREt, die dem Satelliten-Sende-Spot SPEt entspricht, Verbinden des Ausgangsanschlusses der Oppositionsmatrix MATi0 mit der ausgewählten Sendequelle SREt, und Trennen der verbleibenden Sendequellen SREs, wobei s ein Index ist, der von 1 bis N variiert und sich von t unterscheidet, während die Schalter des Ausgangsauswahlrings (34; 134) in geeigneter Weise konfiguriert werden,
** in einem dritten Schritt, Verbinden der entsprechenden Empfangsquelle SRRi0 des Empfangs-Spots SRi0 mit der direkten Eingangszeile der Oppositionsmatrix MATi0, und Trennen der Empfangsquellen SRRj, wobei j von 1 bis N variiert und sich von i0 unterscheidet, von den N-1 abgeleiteten Oppositions-Eingangszeilen Li0, j der Oppositionsmatrix MATi0;
- die Satellitenzugangsstation GWt, des Ranges t, konfiguriert ist, um in einem vierten Schritt, einen Multiplex von Testsignalen zu empfangen, die von den Satellitenzugangsstationen GWk, wobei k von 1 bis N variiert, des ersten Satzes gesendet, von der Empfangsquelle SRRI0 empfangen und anschließend von der Sendequelle SREt weitergeleitet werden, und den Multiplex zu einem Nutz-Erfassungssignal ACQi0, i0 zu digitalisieren,
- die Nutzlast (6) so konfiguriert ist, dass sie in einem fünften Schritt jede verbleibende Empfangsquelle SRRj, wobei j von 1 bis N variiert und sich von i0 unterscheidet, die dem Empfangs-Spot SRj entspricht, der die Satellitenzugangsstation GWj überdeckt, mit der abgeleiteten Oppositionszeile Li0, j der Oppositionsmatrix MATi0 verbindet und die Empfangsquellen SRRk, wobei k von 1 bis N variiert und sich von j unterscheidet, von den N-1 entsprechenden Eingangszeilen Li0, k der Oppositionsmatrix MATi0 trennt; und
- die Satellitenzugangsstation GWt konfiguriert ist, um anschließend in demselben fünften Schritt einen Multiplex von Testsignalen zu empfangen, die von den Satellitenzugangsstationen GWk gesendet werden, wobei k von 1 bis N variiert, von der Empfangsquelle SRRi0 empfangen und von der Sendequelle SREt weitergeleitet werden, und den Multiplex zu einem interferierenden Erfassungssignal ACQi0, j zu digitalisieren, und in einem sechsten Schritt den Rechner zur spektralen Überwachung der empfangenen Kommunikationssignale zur Berechnung, für jedes interferierende Erfassungssignal ACQi0, j, wobei j von 1 bis N variiert und sich von i0 unterscheidet, eines komplexen Korrelationskoeffizienten Ci0, j zwischen dem Nutz-Erfassungssignal ACQi0, i0 und dem interferierenden Erfassungssignal ACQi0, j zu veranlassen, und anhand des komplexen Koeffizienten Ci0, j Dämpfungs- und Phasenverschiebungswerte der Oppositionszeile Li0, j zu bestimmen, die es ermöglichen, das von GWj erzeugte Interferenzsignal auf dem der Satellitenzugangsstation GWi0 zugewiesenen Repeater-Empfangszugang zu unterdrücken;
- die Nutzlast (6) so konfiguriert ist, dass sie in einem siebten Schritt die Dämpfungs- und Phasenverschiebungsglieder der Oppositionsmatrix MATi0 per Fernsteuerung auf die im sechsten Schritt bestimmten Dämpfungs- und Phasenverschiebungswerte einstellt.

9. Multispot-Weltraumkommunikationssystem nach einem der Ansprüche 7 bis 8, wobei
die Nutzlast (6) N Oppositionsmatrizen MATi, wobei i von 1 bis N variiert, mit N Eingangszeilen Li, k, wobei k von 1 bis N variiert, und einen einzigen Ausgangsanschluss aufweist, wobei die Eingangszeile Li, i eine direkte Eingangszeile ist, die direkt mit einem Ausgang des Teilers DIVi verbunden ist, wobei die verbleibende(n) N-1 Eingangszeile(n) Li, j, wobei j ein zweiter Index ist, der von 1 bis N variiert und sich von i unterscheidet, abgeleitete Oppositionszeilen der Oppositionsmatrix MATi sind, die jeweils mit dem/den entsprechenden Teiler(n) DIVj an einem ihrer Ausgänge verbunden ist/sind, und der einzige Ausgangsanschluss der Oppositionsmatrix MATi mit dem Eingangsanschluss des Frequenzumsetzers DWNi0 verbunden ist, wobei die Oppositionsmatrix MATi die Eingangszeilen Li, k und einen Kombinator COMi mit N Eingängen/einem Ausgang aufweist, der als Eingang von den Eingangszeilen Li, k, wobei k von 1 bis N variiert, und an dessen Ausgang mit dem Ausgangsanschluss der Oppositionsmatrix MATi verbunden ist, und jede abgeleitete Oppositions-Eingangszeile, Li,j, wobei j von 1 bis N variiert und sich von i unterscheidet, ein unterschiedliches, fernsteuerbares Dämpfungs- und Phasenverschiebungsglied einschließt, und
die Nutzlast (6) konfiguriert ist, um nach dem Start des Satelliten (4) und der Inbetriebnahme der Satellitenzugangsstationen für i, das von 1 bis N variiert,
im zweiten Schritt die Sendequelle SREt auszuwählen, wobei t eine vorbestimmte Ganzzahl zwischen 1 und N ist, die dem Satelliten-Sende-Spot Set entspricht, der die Satellitenzugangsstation GWt überdeckt, die eine Vorrichtung zur Überwachung des Kommunikationsspektrums aufweist, und den Ausgangsanschluss der Oppositionsmatrix MATi mit der ausgewählten Sendequelle SREt zu verbinden und die verbleibenden Sendequellen SEs zu trennen, wobei s ein Index ist, der von 1 bis N variiert und sich von t unterscheidet, während die Schalter des Ausgangsschaltrings, der zwischen Ausgangsanschlüssen der Repeaterkanäle und den Sendequellen der Sendeantenne angeschlossen ist, in geeigneter Weise konfiguriert werden,
- in dem dritten Schritt die Empfangsquelle SRRi, die dem Empfangs-Spot SRi entspricht, der die Satellitenzugangsstation GWi überdeckt, mit der direkten Eingangszeile der Oppositionsmatrix MATi zu verbinden, und die Empfangsquellen SRRj, wobei j von 1 bis N variiert und sich von i unterscheidet, von den N-1 abgeleiteten Oppositions-Eingangszeilen Li, j der Oppositionsmatrix MATi zu trennen,
- in dem fünften Schritt, der auf den vierten Schritt folgt, in dem die Satellitenzugangsstation GWt, des Ranges t, einen Multiplex von Testsignalen empfängt, die von den Satellitenzugangsstationen GWk, wobei k von 1 bis N variiert, des ersten Satzes gesendet und von der Empfangsquelle SRRi empfangen und von der Sendequelle SEt weitergeleitet werden, und den Multiplex zu einem Nutz-Erfassungssignal ACQi, i, für jede verbleibende Empfangsquelle SRRj, wobei j von 1 bis N variiert und sich von i unterscheidet, digitalisiert, die verbleibende Empfangsquelle SRRj, die dem Empfangs-Spot SRj entspricht, der die Satellitenzugangsstation GWj überdeckt, mit der abgeleiteten Oppositionszeile Li, j der Oppositionsmatrix MATi zu verbinden, und die Empfangsquellen SRRk, wobei k von 1 bis N variiert und sich von j unterscheidet, von den N-1 entsprechenden Eingangszeilen Li, k der Oppositionsmatrix MATi zu trennen.

10. Multispot-Weltraumkommunikationssystem nach Anspruch 9, wobei
die Satellitenzugangsstation GWt zu Folgendem konfiguriert ist:
- im fünften Schritt, Empfangen eines Multiplexes von Testsignalen, die von den Satellitenzugangsstationen GWk gesendet werden, wobei k von 1 bis N variiert, von der Empfangsquelle SRRi empfangen und von der Sendequelle SEt weitergeleitet werden, und Digitalisieren des Multiplexes in ein interferierendes Erfassungssignal ACQi, j; und
- im sechsten Schritt, Veranlassen der Berechnung, durch seinen Rechner zur spektralen Überwachung der empfangenen Kommunikationssignale, für jedes interferierende Erfassungssignal ACQi, j, wobei j von 1 bis N variiert und sich von i unterscheidet, eines komplexen Korrelationskoeffizienten Ci, j zwischen dem Nutz-Erfassungssignal ACQi, i und dem interferierenden Erfassungssignal ACQi, j, und Bestimmen, anhand des komplexen Koeffizienten Ci, j, von Dämpfungs- und Phasenverschiebungswerten der Oppositionszeile Li, j, die es ermöglichen, das von der Satellitenzugangsstation GWj erzeugte Interferenzsignal auf dem der Satellitenzugangsstation GWi zugewiesenen Repeater-Empfangszugang zu unterdrücken; und
die Nutzlast (6) so konfiguriert ist, dass im siebten Schritt die Dämpfungs- und Phasenverschiebungsglieder der Oppositionsmatrix MATi ferngesteuert auf die im sechsten Schritt bestimmten Dämpfungs- und Phasenverschiebungswerte eingestellt werden.

11. Multispot-Weltraumkommunikationssystem nach einem der Ansprüche 7 bis 10, wobei
die Anzahl N benachbarter Satellitenzugangsstationen größer oder gleich 2 und kleiner oder gleich 8 ist.

12. Multispot-Weltraumkommunikationssystem nach einem der Ansprüche 7 bis 11, wobei
die Positionen der Schalter der Eingangsschaltanordnung, die Positionen der Schalter des Ausgangsschaltrings und die Einstellungen der Dämpfungs- und Phasenverschiebungsglieder der abgeleiteten Oppositionszeilen anhand der Sendung von Fernsteuerbefehlen ausgeführt werden, die von einer Fernsteuerungs- und Fernmessstation gesendet werden, die am selben Standort wie der der Satellitenzugangsstation GWt integriert ist, oder an einen anderen Standort als der der Satellitenzugangsstation GWt ausgelagert ist und mit der Satellitenzugangsstation GWt über eine oder mehrere Kommunikationsverbindungen mit oder ohne Nutzung einer Bodeninfrastruktur verbunden ist.

## Claims

1. A method for suppressing uplink interference signals generated between satellite access stations that are geographically neighbouring and form part of a multi-spot space communication system,
the multi-spot space communication system (2) having
- a telecommunications satellite (4) including an on-board multi-spot communication payload (6); and
- a first set of a whole number N, greater than or equal to 2, of satellite access stations GWi that are geographically neighbouring, i being a first whole number index varying from 1 to N; and
- a second set (12) of user terminals (14, 16, 18);
the multi-spot communication payload (6) having a satellite reception antenna (22), a satellite transmission antenna (24), and N repeater channels VRi, i varying from 1 to N,
the satellite reception antenna (22) being configured to receive, in an uplink channel in a reception frequency band, simultaneously and in parallel from N neighbouring reception spots SPRi, i varying from 1 to N, N different reception radio signals SRi, transmitted by the satellite access stations GWi respectively, each satellite access station GWi, i varying from 1 to N, being located in a corresponding unique reception spot SPRi, and each received radio signal SRi, i varying from 1 to N, being delivered by a unique reception source SRRi corresponding to the reception spot SPRi and forming part of the reception antenna;
the satellite transmission antenna (24) being configured to transmit in a downlink channel in a transmission frequency band, simultaneously and in parallel towards N neighbouring transmission spots SPEi, i varying from 1 to N, N different transmission radio signals SEi, provided, respectively, to N transmission sources SREi corresponding to the transmission spots SPEi and forming part of the transmission antenna, each transmission spot SPEi, i varying from 1 to N, covering the corresponding satellite access station GWi, having a coverage substantially identical to that of the reception spot SPRi, and the N transmission radio signals SEi being, respectively, the received radio signals SRi, amplified and transposed, preferably reduced, uniformly in frequency;
each repeater channel VRi, i varying from 1 to N, being nominally comprised between the reception source SRRi and the transmission source SREi having the same value of the index i and having, downstream of the reception source SRRi, a reception amplifier LNAi and an RF divider DIVi with one input and N outputs, and a frequency transposition converter DWNi, preferably a frequency reducer, connected to an output of the RF divider DIVi,
the user terminals of the second set being distributed over the N transmission spots SPEi, i varying from 1 to N;
the method for suppressing interference signals generated between satellite access stations being **characterised in that** it comprises:
- in a first phase (332; 422) before the launch of the satellite, a first step (304; 404) in which, for a fixed and predetermined whole number i0 chosen from among the whole numbers comprised between 1 and N, an opposition matrix MATi0 with N input rows Li0, k, k varying from 1 to N, and a single output terminal is installed permanently in the repeater channel VRi0, the input row Li0, i0 being a direct input row, connected directly to an output of the divider DIVi0, the N-1 remaining input row(s) Li0, j, j being an index varying from 1 to N and different from i0, being derived opposition rows of the opposition matrix MATi0, connected respectively to the corresponding divider(s) DIVj at one of their outputs, and the single output terminal of the opposition matrix MATi0 being connected to the input terminal of the frequency transposition converter DWNi0, the opposition matrix MATi0 having the input rows Li0, i and a combiner COMi0 with N inputs/one output, supplied at its input by the input rows Li0, k, k varying from 1 to N, and connected at its output to the output terminal of the opposition matrix, and each derived opposition input row Li0, j, j varying from 1 to N and being different from i0, including a different remotely controllable attenuator and phase shifter; subsequently
- in a second phase (334; 424), after the satellite has been launched and the satellite access stations have been brought into service,
- a second step (306; 406) in which a transmission source SREt, t being a predetermined whole number comprised between 1 and N, corresponding to the satellite transmission spot SPEt, covering the satellite access station GWt which has a communication spectrum monitoring device, is selected, and in which the output terminal of the opposition matrix MATi0 is connected to the selected transmission source SREt and the remaining transmission sources SREs, s being an index varying from 1 to N and different from t, are disconnected from their associated repeater channels VRs, while suitably configuring switches of an output selection ring (134), connected between output terminals of the repeater channels VRi and the transmission sources SREi of the transmission antenna, i varying from 1 to N; subsequently
- a third step (308; 408) in which the corresponding reception source SRRi0 of the reception spot SPRi0 covering the satellite access station GWi0 is connected to the direct input row of the opposition matrix MATi0, and the reception sources SRRj, j varying from 1 to N and being different from i0, are disconnected from the N-1 derived opposition input rows Li0, j of the opposition matrix MATi0 by means of switches of an input switch assembly (32; 132); subsequently
- a fourth step (310; 410) in which the satellite access station GWt, of rank t, receives a multiplex of test signals transmitted by the satellite access stations GWk, k varying from 1 to N, of the first set, and received by the reception source SRRI0 and retransmitted by the transmission source SREt, and digitises said multiplex into a useful acquisition signal ACQi0, i0 by means of a communication spectrum monitor CSM; subsequently
- a fifth step (312; 412) in which, for each remaining reception source SRRj, j varying from 1 to N and being different from i0,
** the remaining reception source SRRj, corresponding to the reception spot SPRj covering the satellite access station GWj, is connected to the derived opposition row Li0, j of the opposition matrix MATi0, and the reception sources SRRk, k varying from 1 to N and being different from j, are disconnected from the N-1 corresponding input rows Li0, k of the opposition matrix MATi0 by means of the switches of an input switch assembly (32; 132); subsequently
** the satellite access station GWt receives a multiplex of test signals transmitted by the satellite access stations GWk, k varying from 1 to N, received by the reception source SRRj and retransmitted by the transmission source SREt, and digitises said multiplex into an interference acquisition signal ACQi0, j; subsequently
- a sixth step (314; 414) in which the satellite access station GWt causes a computer for spectral monitoring of the received communication signals to calculate, for each interference acquisition signal ACQi0, j, j varying from 1 to N and being different from i0, a complex correlation coefficient Ci0, j between the useful acquisition signal ACQi0, i0 and the interference acquisition signal ACQi0, j, and to determine, on the basis of the complex coefficient Ci0, j, values of attenuation and phase shift of the opposition row Li0, j allowing the rejection of the interference signal generated by GWj on the repeater reception access assigned to the satellite access station GWi0; subsequently
- a seventh step (316; 416), in which the attenuators and phase shifters of the opposition matrix MATi0 are set by remote control to the values of attenuation and phase shift determined in the sixth step (314; 414).

2. The method for suppressing interference signals generated between satellite access stations according to claim 1, wherein
- during the first phase (332; 422), the first step (304; 404) before the launch of the satellite consists in:
permanently installing in a repeater channel VRi, for i varying from 1 to N, an opposition matrix MATi with N input rows Li, k, k varying from 1 to N, and a single output terminal, the input row Li, i being a direct input row, connected directly to an output of the divider DIVi, the N-1 remaining input row(s) Li, j, j being a second index varying from 1 to N and being different from i, being derived opposition rows of the opposition matrix MATi, connected respectively to the corresponding divider(s) DIVj at one of their outputs, and the single output terminal of the opposition matrix MATi being connected to the input terminal of the frequency transposition converter DWNi, the opposition matrix MATi having the input rows Li, k and a combiner COMi with N inputs/one output, supplied at its input by the input rows Li, k, k varying from 1 to N, and connected at its output to the output terminal of the opposition matrix MATi, and each derived opposition input row Li, j, j varying from 1 to N and being different from i, including a different remotely controllable attenuator and phase shifter; subsequently
- in the second phase (334; 424), after the satellite (4) has been launched and the satellite access stations have been brought into service, for i varying from 1 to N,
- the second step (306; 406) consists in selecting the transmission source SREt, t being a predetermined whole number comprised between 1 and N, corresponding to the satellite transmission spot SPEt, covering the satellite access station GWt which has a communication spectrum monitoring device, and in connecting the output terminal of the opposition matrix MATi to the selected transmission source SREt, and in disconnecting the remaining transmission sources SREs, s being an index varying from 1 to N and different from t, from their associated repeater channels VRs, by suitably configuring the switches of the output selection ring (134) connected between the output terminals of the repeater channels VRi and the transmission sources SREi of the transmission antenna (24);
- the third step (308; 408) consists in connecting the reception source SRRi, corresponding to the reception spot SPRi covering the satellite access station GWi, to the direct input row of the opposition matrix MATi, and in disconnecting the reception sources SRRj, j varying from 1 to N and being different from i, from the N-1 derived opposition input rows Li,j of the opposition matrix MATi;
- the fourth step (310; 410) consists in that the satellite access station GWt, of rank t, receives a multiplex of test signals transmitted by the satellite access stations GWk, k varying from 1 to N, of the first set, and received by the reception source SRRi and retransmitted by the transmission source SREt, and digitises said multiplex into a useful acquisition signal ACQi, i; subsequently
- the fifth step (312; 412) consists, for each remaining reception source SRRj, j varying from 1 to N and being different from i, in
** connecting the remaining reception source SRRj, corresponding to the reception spot SPRj covering the satellite access station GWj, to the derived opposition row Li, j of the opposition matrix MATi, and disconnecting the reception sources SRRk, k varying from 1 to N and being different from j, from the N-1 corresponding input rows Li, k of the opposition matrix MATi; subsequently
** in that the satellite access station GWt receives a multiplex of test signals transmitted by the satellite access stations GWk, k varying from 1 to N, received by the reception source SRRi and retransmitted by the transmission source SREt, and digitises said multiplex into an interference acquisition signal ACQi, j;
- the sixth step (314; 414) consists in that the satellite access station GWt causes its computer for spectral monitoring of the communication signals to calculate, for each interference acquisition signal ACQi, j, j varying from 1 to N and being different from i, a complex correlation coefficient Ci, j between the useful acquisition signal ACQi, i and the interference acquisition signal ACQi, j, and to determine, on the basis of the complex coefficient Ci, j, values of attenuation and phase shift of the opposition row Li, j allowing the rejection of the interference signal generated by the satellite access station GWj on the repeater reception access assigned to the satellite access station GWi;
- the seventh step (316; 416) consists in that the attenuators and phase shifters of the opposition matrix MATi are set by remote control to the values of attenuation and phase shift determined in the sixth step (314; 414).

3. The method for suppressing interference signals generated between satellite access stations as claimed in any of claims 1 to 2, wherein
the number N of neighbouring satellite access stations is equal to 2 or 3.

4. The method for suppressing interference signals generated between satellite access stations according to any of claims 1 to 3, wherein
the positions of the switches of an input switching set, the positions of the switches of the output switching ring, and the settings of the attenuators and the phase shifters of the derived opposition rows are executed on the basis of the sending of remote controls sent by a remote control and measurement station, integrated on the same site as that of the satellite access station GWt, or deported on a site other than that of the satellite access station GWt and connected to said satellite access station GWt by a terrestrial infrastructure.

5. The method for suppressing interference signals generated between satellite access stations according to any of claims 1 to 4, wherein
the waveform of the test signals transmitted by the satellite access stations is either a wide-band white noise, or a comb structure of lines, or representative communication signals of the service.

6. The method for suppressing interference signals generated between satellite access stations according to any of claims 1 to 5, comprising a third phase (336; 426) of implementation of the communication service and an eighth step (308; 408) in which
for i varying from 1 to N, each reception source SRi of the multi-spot reception antenna is connected to the corresponding transmission source SEi of the transmission antenna through the associated repeater channel VRi, by positioning the switches of the input switching assembly and the switches of the output ring so as to obtain this configuration of interconnection of the sources to each other,
the opposition matrix MATi0 or the opposition matrices MATi having been set in the first phase (332; 422) and the second phase (334; 424) so as to suppress the interference created by the satellite access stations GWj neighbouring the satellite access station GWi0.

7. A multi-spot space communication system for suppressing the uplink interference signals generated between geographically neighbouring satellite access stations, and comprising
- a telecommunications satellite (4) including an on-board multi-spot communication payload (6); and
- a first set of a whole number N, greater than or equal to 2, of satellite access stations GWi, i being a first whole number index varying from 1 to N, that are geographically neighbouring so that they create interference with each other on at least one satellite access; and
- a second set (12) of user terminals (14, 16, 18);
the multi-spot communication payload (6) having one or more satellite reception antennas (22), a satellite transmission antenna (24), and N repeater channels VRi, i varying from 1 to N,
the satellite reception antenna or antennas (22) being configured to receive, in an uplink channel in a reception frequency band, simultaneously and in parallel from N neighbouring reception spots SPRi, i varying from 1 to N, N different reception radio signals SRi, transmitted by the satellite access stations GWi respectively, each satellite access station GWi, i varying from 1 to N, being located in a corresponding unique reception spot SPRi, and each radio signal SRi, i varying from 1 to N, being delivered by a unique source SRRi corresponding to the reception spot SPRi of the reception antenna;
the satellite transmission antenna (24) being configured to transmit in a downlink channel in a transmission frequency band, simultaneously and in parallel towards N neighbouring transmission spots SPEi, i varying from 1 to N, the N radio signals received, amplified and uniformly frequency transposed, Sid, each transmission spot SPEi, i varying from 1 to N, covering the corresponding satellite access station GWi, having a coverage substantially identical to that of the reception spot SPRi;
each repeater channel VRi, i varying from 1 to N, being nominally comprised between the reception source SRRi and the transmission source SREi having the same index value i and having, downstream of the reception source SRRi, a reception amplifier LNAi and an RF divider DIVi with one input and N outputs, and a transposition frequency converter and reducer, preferably a frequency reducer, DWNi, connected to an output of the RF divider DIVi,
the user terminals of the second set being distributed over the N transmission spots SPEi, i varying from 1 to N;
the multi-spot space communication system being **characterised in that**:
- a satellite access station GWt, t being a predetermined whole number comprised between 1 and N, corresponding to the satellite transmission spot SPEt, which covers it, has a communication spectrum monitoring device CSM; and
- the payload (6) has switches of an input switch assembly (32; 132), connected between input terminals of repeater channels and the reception sources of the reception antenna, and switches of an output selection ring (34; 134), connected between output terminals of the repeater channels VRi and the transmission sources SREi of the transmission antenna for selectively connecting the reception sources SRRj, one after the other, during a test/calibration step and connecting all the sources SRRj during an operational communication service, while suitably configuring the output selection ring switches; and
- the payload (6) comprises at least one opposition matrix MATi0, i0 being a fixed and predetermined whole number comprised between 1 and N, with N input rows Li0, k, k varying from 1 to N, and a single output terminal, the input row Li0, i0 being a direct input row connected directly to an output of the divider DIVi0, the N-1 remaining input row(s) Li0 j, j being an index varying from 1 to N and being different from i0, being derived opposition rows of the opposition matrix MATi0, connected respectively to the corresponding divider(s) DIVj at one of their outputs, and the single output terminal of the opposition matrix MATi0 being connected to the input terminal of the frequency transposition converter DWNi0, the opposition matrix MATi0 having the input rows Li0, i and a combiner COMi0 with N inputs/one output, supplied at its input by the input rows Li0, k, k varying from 1 to N, and connected at its output to the output terminal of the opposition matrix, and each derived opposition input row Li0, j, j varying from 1 to N and being different from i0, including a different attenuator and phase shifter remotely controllable to values of attenuation and phase shift determined by the satellite access station GWt.

8. The multi-spot space communication system for suppressing the uplink interference signals according to claim 7, wherein
- the payload (6) is configured for, in a second phase after the satellite has been launched and the satellite access stations have been brought into service:
** in a second step, selecting the transmission source SREt, corresponding to the satellite transmission spot SPEt, connecting the output terminal of the opposition matrix MATi0 to the selected transmission source SREt, and disconnecting the remaining transmission sources SREs, s being an index varying from 1 to N and different from t, by suitably configuring the switches of the output selection ring (34; 134);
** in a third step, connecting the corresponding reception source SRRi0 of the reception spot SRi0 to the direct input row of the opposition matrix MATi0, and disconnecting the reception sources SRRj, j varying from 1 to N and being different from i0, from the N-1 derived opposition input rows Li0, j of the opposition matrix MATi0;
- the satellite access station GWt, of rank t, is configured for, in a fourth step, receiving a multiplex of test signals transmitted by the satellite access stations GWk, k varying from 1 to N, of the first set, received by the reception source SRRI0 and subsequently retransmitted by the transmission source SREt, and digitising said multiplex into a useful acquisition signal ACQi0, i0;
- the payload (6) is configured for, in a fifth step, connecting each remaining reception source SRRj, j varying from 1 to N and being different from i0, corresponding to the reception spot SRj covering the satellite access station GWj, to the derived opposition row Li0, j of the opposition matrix MATi0, and disconnecting the reception sources SRRk, k varying from 1 to N and being different from j, from the N-1 corresponding input rows Li0, k of the opposition matrix MATi0; and
- the satellite access station GWt is configured for, subsequently, in the same fifth step, receiving a multiplex of test signals transmitted by the satellite access stations GWk, k varying from 1 to N, received by the reception source SRRi0 and retransmitted by the transmission source SREt, and digitising said multiplex into an interference acquisition signal ACQi0, j, and, in a sixth step, causing the computer for spectral monitoring of the received communication signals to calculate, for each interference acquisition signal ACQi0, j, j varying from 1 to N and being different from i0, a complex correlation coefficient Ci0, j between the useful acquisition signal ACQi0, i0 and the interference acquisition signal ACQi0, j, and to determine, on the basis of the complex coefficient Ci0, j, values of attenuation and phase shift of the opposition row Li0, j allowing the rejection of the interference signal generated by GWj on the repeater reception access assigned to the satellite access station GWi0;
- the payload (6) is configured for, in a seventh step, setting the attenuators and phase shifters of the opposition matrix MATi0 by remote control to the values of attenuation and phase shift determined in the sixth step.

9. The multi-spot space communication system according to any of claims 7 to 8, wherein
the payload (6) has N opposition matrices MATi, i varying from 1 to N, with N input rows Li, k, k varying from 1 to N, and a single output terminal, the input row Li, i being a direct input row connected directly to an output of the divider DIVi, the N-1 remaining input row(s) Li, j, j being a second index varying from 1 to N and different from i, being derived opposition rows of the opposition matrix MATi, connected respectively to the corresponding divider(s) DIVj at one of their outputs, and the single output terminal of the opposition matrix MATi being connected to the input terminal of the frequency transposition converter DWNi0, the opposition matrix MATi having the input rows Li, k and a combiner COMi with N inputs/one output, supplied at its input by the input rows Li, k, k varying from 1 to N, and connected at its output to the output terminal of the opposition matrix MATi, and each derived opposition input row Li, j, j varying from 1 to N and being different from i, including a different remotely controllable attenuator and phase shifter; and
the payload (6) is configured for, after the satellite (4) has been launched and the satellite access stations have been brought into service, for i varying from 1 to N,
in the second step, selecting the transmission source SREt, t being a predetermined whole number comprised between 1 and N, corresponding to the satellite transmission spot Set, covering the satellite access station GWt which has a communication spectrum monitoring device, and connecting the output terminal of the opposition matrix MATi to the selected transmission source SREt, and disconnecting the remaining transmission sources SEs, s being an index varying from 1 to N and different from t, by suitably configuring the switches of the output switching ring connected between output terminals of the repeater channels and the transmission sources of the transmission antenna;
- in the third step, connecting the reception source SRRi, corresponding to the reception spot SRi covering the satellite access station GWi, to the direct input row of the opposition matrix MATi, and disconnecting the reception sources SRRj, j varying from 1 to N and being different from i, from the N-1 derived opposition input rows Li, j of the opposition matrix MATi;
- in the fifth step, after the fourth step in which the satellite access station GWt, of rank t, receives a multiplex of test signals transmitted by the satellite access stations GWk, k varying from 1 to N, of the first set, and received by the reception source SRRi and retransmitted by the transmission source SEt, and digitises said multiplex into a useful acquisition signal ACQi, i, for each remaining reception source SRRj, j varying from 1 to N and being different from i, connecting the remaining reception source SRRj, corresponding to the reception spot SRj covering the satellite access station GWj, to the derived opposition row Li, j of the opposition matrix MATi, and disconnecting the reception sources SRRk, k varying from 1 to N and being different from j, from the N-1 corresponding input rows Li, k of the opposition matrix MATi.

10. The multi-spot space communication system according to claim 9, wherein
the satellite access station GWt is configured for:
- in the fifth step, receiving a multiplex of test signals transmitted by the satellite access stations GWk, k varying from 1 to N, received by the reception source SRRi and retransmitted by the transmission source SEt, and digitising said multiplex into an interference acquisition signal ACQi, j; and
- in the sixth step, causing its computer for spectral monitoring of the received communication signals to calculate, for each interference acquisition signal ACQi, j, j varying from 1 to N and being different from i, a complex correlation coefficient Ci, j between the useful acquisition signal ACQi, i and the interference acquisition signal ACQi, j, and determining, on the basis of the complex coefficient Ci, j, values of attenuation and phase shift of the opposition row Li, j allowing the rejection of the interference signal generated by the satellite access station GWj on the repeater reception access assigned to the satellite access station GWi; and
the payload (6) is configured so that, in the seventh step, the attenuators and phase shifters of the opposition matrix MATi are set by remote control to the values of attenuation and phase shift determined in the sixth step.

11. The multi-spot space communication system according to any of claims 7 to 10, wherein
the number N of neighbouring satellite access stations is greater than or equal to 2 and less than or equal to 8.

12. The multi-spot space communication system according to any of claims 7 to 11, wherein
the positions of the switches of the input switching assembly, the positions of the switches of the output switching ring, and the settings of the attenuators and the phase shifters of the derived opposition rows are executed on the basis of the sending of remote controls sent by a remote control and measurement station, integrated on the same site as that of the satellite access station GWt, or deported on a site other than that of the satellite access station GWt and connected to said satellite access station GWt by one or more communication links with or without the use of a terrestrial infrastructure.
